# EUROPEAN PATENT APPLICATION

(11) **EP 4 659 831 A1**
(43) Date of publication of application: **10.12.2025**
(21) Application number: 24750283.4
(22) Date of filing: 30.01.2024
(51) Int. Cl.: B01D 11/04

(54) **CLEANING DEVICE AND EXTRACTION DEVICE**

(30) Priority: 31.01.2023 JP 2023012512
(71) Applicant: Ushio Chemix Corporation, Kakegawa-shi, Shizuoka 437-1302 (JP)
(72) Inventor: OKAMOTO Kazuo, Omaezaki-shi, Shizuoka 437-1613 (JP); TSUTSUI Masanori, Omaezaki-shi, Shizuoka 437-1613 (JP)
(74) Representative: Müller-Boré & Partner Patentanwälte PartG mbB
(86) International application number: PCT/JP2024/002819
(87) International publication number: WO 2024/162334

(57) **Abstract**

An apparatus capable of more easily extracting an extraction target substance contained in a liquid raw material is provided.

Provided is an apparatus for extracting an extraction target substance dissolved in a liquid raw material, wherein the apparatus comprises: a raw material tank, a solvent tank, a pressurized gas feeding means for feeding pressurized gas to the solvent tank, a small diameter portion; an extraction unit including a mixer, an extraction portion and separation portion, a first recovering tank and a second recovering tank.

## Description

### FIELD OF THE INVENTION

The present invention relates to an apparatus for extracting an extraction target substance dissolved in a liquid raw material. Specifically, the present invention relates to a cleaning apparatus for extracting a contaminant dissolved in the liquid raw material and an extraction apparatus for extracting an intended substance dissolved in the liquid raw material.

### BACKGROUND ART

A microreactor, for example, can be used as an apparatus for conducting a reaction such as chemical and biochemical reactions.

The microreactor is attracting attention as a reactor to replace conventional batch reactors, and various studies have been conducted on the microreactor. The microreactor is a general term for flow-type reaction apparatuses with a space scale of a reaction system of some micrometers for example, in which a chemical or biochemical reaction is carried out in the reaction system. The microreactor has a transport path for materials used for a reaction. The inner diameter of the transport path is, for example, some micrometers. In the microreactor, a plurality of substances can be efficiently mixed to carry out a reaction. Further, a reaction can proceed uniformly at a constant temperature. Therefore, by using the microreactor, not only can the reaction selectivity be improved, but also the reaction rate can be increased. Further, it is said that the microreactor can be more easily scaled up than a conventional batch reactor from the laboratory scale to the production process scale. However, the microreactor has a high production cost as well as a lot of technical problems. For this reason, not many microchemical plants aimed for production have been realized.

Generally, the microreactor produce less production than a conventional batch reactor. In a microchemical plant, a method called numbering-up is being studied to increase production. The numbering-up is a method of arranging a plurality of microreactors in parallel.

The numbering-up can be realized by arranging many of the same apparatuses having pumps in parallel. The numbering-up method has a problem which is that the production cost for the apparatus is high. This method can scale up from the laboratory scale to the production scale without changing, e.g., the reaction conditions, and therefore it is easily industrialized.

Patent Document 1 has a description of a numbering-up method in which a channel is branched. This method is a method in which a liquid raw material transported from a pump is distributed to a plurality of branched channels, and mixers are arranged in parallel.

Patent Document 2 has a description of a method in which a liquid is uniformly distributed to a plurality of microreactors without using a branched pipe.

Patent Document 3 has a description of a microchannel reactor comprising a plurality of stacked channel units.

Patent Document 4 has a description of a microreactor which is aimed at reducing the microchemical plant in cost and size.

Patent Document 5 describes a microchemical plant having a transfer means for transferring a liquid raw material using pressure of a gas.

Patent Document 6 describes a mixer-settler having a mixing section for mixing plurality of liquids and a separation compartment for storing and separating the plurality of liquids that are mixed in the mixing section.

### Prior Art Documents

### Patent Documents

Patent Document 1: JP 2007-136253 A
Patent Document 2: JP 2011-36773 A
Patent Document 3: JP 2014-217823 A
Patent Document 4: JP 2010-94660 A
Patent Document 5 JP 6618997 B
Patent Document 6: JP 2022-41098 A

### DISCLOSURE OF THE INVENTION

When a substance is produced by using a chemical reaction or the like, a produced substance (an intended substance) may exist in a solvent. In addition, an intended substance or a solvent containing an intended substance may contain a contaminant. In this specification, a solvent containing an intended substance is referred to as "a liquid raw material".

When a contaminant is present in a liquid raw material, the liquid raw material can be cleaned by extracting the contaminant from the liquid raw material. When an intended substance contained in a liquid raw material is recovered, the intended substance can be recovered by extracting the intended substance from the liquid raw material. As described later, the intended substance and the contaminant extracted from the liquid raw material are referred to as "an extraction target substance" in this specification.

A microreactor is a flow-type reaction apparatus in which the spatial scale of the reaction system in which chemical and biochemical reactions are carried out is, for example, some micrometers. An apparatus similar to a microreactor can be used to extract an extraction target substance from a liquid raw material.

A microreactor produces less production than a conventional batch reactor. In a microreactor for the purpose of production, a method called numbering-up has been investigated to increase the production amount. There are two methods of numbering-up: one is to branch channels and the other is to use apparatuses in parallel. In addition to the numbering-up method, there is another method of increasing the production amount, which is equaling-up, in which the flow rate is increased by making the pipe thicker and longer without changing the residence time.

In an extraction using slug flow, when equaling-up is carried out for increasing a production amount, a problem different from the reaction occurs. When the flow rate is increased, it becomes an emulsion and the separability deteriorates, and when a thick pipe is used, an extraction efficiency of an extraction target substance decreases, and the slug flow becomes unstable. Therefore, in order to increase the amount of production, it is necessary to perform the numbering-up.

It is said that it is difficult to make a liquid raw material flow evenly through many channels in the numbering-up by branching channels. In addition, when one channel is being plugged, the flow rate changes in other channels, so it is necessary to prevent being plugged. In addition, there is a disadvantage that it is necessary to constantly monitor each channel for being plugged.

Thus, the numbering-up by branching channels contains many technical problems. Therefore, the numbering-up with apparatuses in parallel is easier to industrialize. However, the production cost of this numbering-up is enormous. Therefore, it is desired to realize a microreactor that can perform the numbering-up easily and inexpensively.

One of the factors affecting the production cost of a microreactor is price and performance of a pump. Generally, in a microreactor, a syringe pump and/or a plunger pump with low pulsation are used as a means of transferring the substances to be reacted (a liquid raw material and/or a raw material solution). When a pump with pulsation is used for transferring the solution, it is difficult to generate fine and stable slug flow inside a device for extracting an extraction target substance, and extraction efficiency of an extraction target substance decreases.

Although a syringe pump does not have pulsation, more than two pumps per system are required for continuous operation. To precisely control the flow rate, an expensive syringe pump system is required. In addition, the syringe deteriorates during continuous operation, and there is a risk of leakage and breakage.

The plunger pump is easy to perform continuous operation, but if only one piston is used, the pulsation is large, and a length of slug flow (a length of flow of the same liquid through a pipe when two liquids flow through the pipe as a slug flow) becomes long, which lowers the extraction efficiency of the extraction target substance. Therefore, it is necessary to use an expensive double or triple pump in which two or three pistons are connected.

Further, when contaminant contained in a liquid raw material are extracted multiple times, contamination may occur due to taking out in the extraction process.

The present invention has been made in view of the above problems, and it is an object of the present invention to provide an apparatus capable of more easily extracting an extraction target substance contained in a liquid raw material. It is an object of the present invention to provide an apparatus capable of more easily extracting an extraction target substance contained in a liquid raw material while suppressing the occurrence of contamination.

In order to solve the above problems, the present invention has the following configurations.

### (Configuration 1)

Configuration 1 is an apparatus for extracting an extraction target substance dissolved in a liquid raw material,
the apparatus comprising:
at least one raw material tank for storing the liquid raw material;
a solvent tank for storing a solvent for extracting the extraction target substance from the liquid raw material;
a pressurized gas feeding means for supplying pressurized gas to the solvent tank;
a small diameter portion, wherein
   one end of the small diameter portion is connected to the solvent tank via a first solvent pipe,
   the other end of the small diameter portion is connected to a second solvent pipe, and
   an inner diameter of the small diameter portion is smaller than inner diameters of the first solvent pipe and the second solvent pipe;
at least one extraction unit including a mixer, an extraction portion and a liquid separating portion,
wherein the mixer comprises
   a first inlet hole connected to the raw material tank, and
   a second inlet hole connected to the small diameter portion by the second solvent pipe,
wherein the mixer is for mixing a liquid flowing in from the first inlet hole and a liquid flowing in from the second inlet hole,
wherein the extraction portion is the extraction portion for extracting the extraction target substance from the liquid raw material to the solvent, and the extraction portion is connected to the mixer,
wherein the liquid separating portion is connected to the extraction portion,
wherein the liquid separating portion has
   a first outlet hole through which a first recovered liquid containing the solvent and the extraction target substance is discharged and
   a second outlet hole through which a second recovered liquid separated from the first recovered liquid is discharged,
wherein at least one of the raw material tank is connected to the first inlet hole of the mixer of at least one of the extraction unit;
a first recovering tank connected to the first outlet hole for recovering the first recovered liquid; and
a second recovering tank connected to the second outlet hole for recovering the second recovered liquid.

### (Configuration 2)

Configuration 2 is the apparatus of the configuration 1, wherein the extraction target substance is a contaminant, and the apparatus is a cleaning apparatus of the liquid raw material.

### (Configuration 3)

Configuration 3 is the apparatus of the configuration 1, wherein the extraction target substance is an intended substance, and the apparatus is an extraction apparatus of the intended substance.

### (Configuration 4)

Configuration 4 is the apparatus of any of the configurations 1 to 3, wherein the pressurized gas feeding means comprises a high pressure gas feeding portion and a pressure regulating portion, and
a pressure inside the solvent tank and the first solvent pipe is 1.5 MPa or less.

### (Configuration 5)

Configuration 5 is the apparatus of any of the configurations 1 to 4, wherein the small diameter portion further comprises a temperature controller to regulate temperature of the small diameter portion.

### (Configuration 6)

Configuration 6 is the apparatus of any of the configurations 1 to 5, wherein
the apparatus comprises at least two of the extraction units connected in series,
the raw material tank is connected to the first inlet hole of the mixer of the extraction unit on most upstream,
in a pair of the extraction units connected in series, the second outlet hole of the extraction unit on upstream side is connected to the first inlet hole of the mixer of the extraction unit on downstream side;
the solvent tank is connected to at least two of the mixers of the extraction units via the small diameter portions,
the small diameter portions connected to the second inlet holes are the small diameter portions with different pressure losses on upstream side and downstream side,
channels connected to the first recovering tank and the second recovering tank have second small diameter portions.

### (Configuration 7)

Configuration 7 is the apparatus of any of the configurations 1 to 5, wherein
the apparatus comprises at least two of the extraction units connected in parallel,
the raw material tank is connected to the first inlet holes of the mixers of the at least two of extraction units; and
the solvent tank is connected to the second inlet holes of the mixers of at least two of the extraction units via the small diameter portions.

### (Configuration 8)

Configuration 8 is the apparatus of any of the configurations 1 to 5, wherein
the apparatus comprises at least two of the extraction units connected in series;
the raw material tank is connected to the first inlet hole of the mixer of the extraction unit on most upstream,
in at least one pair of the extraction units connected in series, the first outlet hole of the extraction unit on upstream side is connected to the first inlet hole of the mixer of the extraction unit on downstream side;
the solvent tank is connected to the mixers of the extraction units via the small diameter portions,
the small diameter portions connected to the second inlet holes are the small diameter portions having different pressure losses on upstream side and downstream side, and
channels connected to the first recovering tank and the second recovering tank have second small diameter portions.

### (Configuration 9)

Configuration 9 is the apparatus of the configuration 8, wherein
in the extraction unit on most upstream and the extraction unit connected in series to the extraction unit on the most upstream, the first outlet hole of the extraction unit on the most upstream is connected to the first inlet hole of the mixer of the extraction unit on downstream side, and
in at least one pair of the extraction units connected in series, the second outlet hole of the extraction unit on upstream side is connected to the first inlet hole of the mixer of the extraction unit on downstream side.

### (Configuration 10)

Configuration 10 is the apparatus of the configuration 8 or 9, wherein the apparatus comprises at least two of the solvent tanks, each of the solvent tank stores a different solvent.

### (Configuration 11)

Configuration 11 is the apparatus of any of the configurations 1 to 10, wherein the solvent tank is a pressure tank.

### (Configuration 12)

Configuration 12 is the apparatus of any of the configurations 1 to 11, wherein the mixer has a microchannel, and the width of the microchannel is 0.01 µm to 20 mm.

### (Configuration 13)

Configuration 13 is the apparatus of any of the configurations 1 to 12, wherein an inner diameter of the first solvent pipe and the second solvent pipe is 0.1 mm to 20 mm.

### (Configuration 14)

Configuration 14 is the apparatus of any of the configurations 1 to 13, wherein the apparatus further comprises a liquid raw material feeding means for feeding the liquid raw material to the mixer.

According to the present invention, it is possible to provide an apparatus capable of more easily extracting an extraction target substance contained in a liquid raw material. Also, according to the present invention, it is possible to provide an apparatus capable of more easily extracting an extraction target substance contained in a liquid raw material while suppressing the occurrence of contamination.

### BRIEF DESCRIPTION OF THE DRAWINGS

Fig. 1 is a schematic diagram of an apparatus related to a first embodiment.
Fig. 2 is a schematic diagram of another embodiment of an apparatus related to the first embodiment.
Fig. 3 is a schematic diagram of an apparatus related to a second embodiment and a third embodiment.
Fig. 4 is a schematic diagram of an apparatus related to a fourth embodiment.
Fig. 5 is an enlarged schematic sectional diagram of a small diameter portion.
Fig. 6 is a perspective schematic diagram showing another example of the small diameter portion.
Fig. 7 is a schematic sectional schematic diagram showing another example of the small diameter portion.
Fig. 8 is a schematic diagram of a reaction apparatus for producing a reactant.
Fig. 9 is a schematic diagram of an apparatus related to a sixth embodiment.

### MODE FOR CARRYING OUT THE INVENTION

The present embodiment is an apparatus for extracting an extraction target substance dissolved in a liquid raw material. The apparatus of the present embodiment is described below.

### <First embodiment>

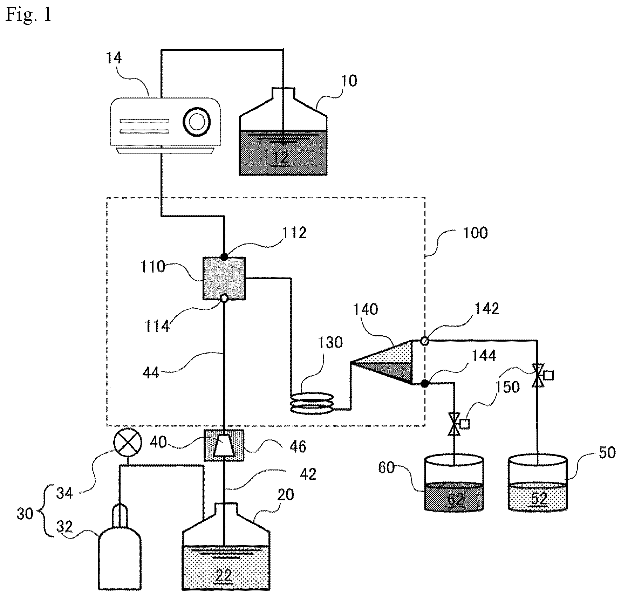

Fig. 1 shows a schematic diagram of an apparatus of a first embodiment of the present embodiment. The apparatus of the first embodiment of the present embodiment includes a raw material tank 10, a solvent tank 20, a pressurized gas feeding means 30, a channel with a small diameter portion 40, an extraction unit 100, a first recovering tank 50, and a second recovering tank 60. The apparatus of the first embodiment of the present embodiment can extract an extraction target substance dissolved in a liquid raw material 12.

In Fig. 1, the portions connected by straight lines are connected so that a fluid can move. The same applies to the other figures. In this specification, "portion A connects to portion B" means that portion A and portion B are connected by a pipe or the like so that a fluid can move between them.

The pipe or the like for connecting each portion can be a pipe such as a tube, but it is not limited thereto. For example, a plate-like structure formed by a channel on a plate-like surface of a flat plate or the like can be used as a pipe to connect each portion.

In this specification, "upstream side" and "downstream side" are defined by the direction in which a liquid raw material 12 and a solvent 22 flow inside the apparatus of the present embodiment. Specifically, the direction closer to the raw material tank 10 and the solvent tank 20 is upstream side, and the direction closer to the first recovering tank 50 and the second recovering tank 60 is downstream side.

In this specification, "an extraction target substance" is a contaminant or an intended substance. The apparatus of the present embodiment is a cleaning apparatus of a liquid raw material 12 when the extraction target substance is a contaminant. If the extraction target substance is an intended substance, the apparatus of the present embodiment is an extraction apparatus of the intended substance.

If the extraction target substance is an intended substance, the cleaning apparatus of the present embodiment can take out a liquid raw material 12 from raw material tank 10 and extract a contaminant from the liquid raw material 12. As a result, the contaminant can be removed from the liquid raw material 12 and the liquid raw material 12 can be cleaned. In the apparatus of the present embodiment, the contaminant can be extracted from the liquid raw material 12 to a solvent 22 by contacting the solvent 22 with the liquid raw material 12.

If the extraction target substance is an intended substance, the extraction apparatus of the present embodiment can take out a liquid raw material 12 from a raw material tank 10 and extract an intended substance from the liquid raw material 12. As a result, the intended substance can be extracted from the liquid raw material 12. In the apparatus of the present embodiment, the intended substance can be extracted from the liquid raw material 12 to a solvent 22 by contacting the solvent 22 with the liquid raw material 12.

The apparatus of the present embodiment can also be used as an apparatus for extracting an extraction target substance contained in a slurry-like liquid raw material 12.

In the apparatus of the present embodiment, when a hydrophilic liquid raw material 12 is used as a liquid raw material 12, a hydrophobic solvent 22 is preferably used as a solvent 22 for extracting an extraction target substance from the liquid raw material 12. In the apparatus of the present embodiment, when a hydrophobic liquid raw material 12 is used as a liquid raw material 12, a hydrophilic solvent 22 is preferably used as a solvent 22 for extracting an extraction target substance from the liquid raw material 12. When a liquid raw material 12 and a solvent 22 are different kinds of liquids, separation of the liquid raw material 12 and the solvent 22 can be facilitated after extracting the extraction target substance.

### <<Raw material tank 10>>

As shown in Fig. 1, the apparatus of the present embodiment includes at least one raw material tank 10 for storing a liquid raw material 12. The raw material tank 10 is a tank for storing a liquid raw material 12.

The raw material tank 10 is not particularly limited as long as it can store the liquid raw material 12. For example, a tank made of metal, resin or glass can be used. In the present embodiment, a pressure tank made of SUS or polyethylene can be used as the raw material tank 10. By using a pressure tank as the raw material tank 10, the inside of the raw material tank 10 can be maintained at a high pressure. Therefore, by using the pressurized gas feeding means 30 described later, it is possible to easily take out the liquid raw material 12 from the raw material tank 10 at a low cost.

The raw material tank 10 is connected to an extraction unit 100 described later. For example, a PTFE (polytetrafluoroethylene) tube with an inner diameter of 1.0 to 10 mm can be used as a pipe connecting the raw material tank 10 and the extraction unit 100.

The apparatus of the present embodiment is preferably further provided with a liquid raw material feeding means for supplying the liquid raw material 12 to a mixer 110 of the extraction unit 100 described later. In the example shown in Fig. 1, a pump 14 is used as the liquid raw material feeding means. As the liquid raw material feeding means, a pump 14 such as a syringe pump, a plunger pump, a diaphragm pump, a pulsation-free tube pump and a centrifugal pump can be used.

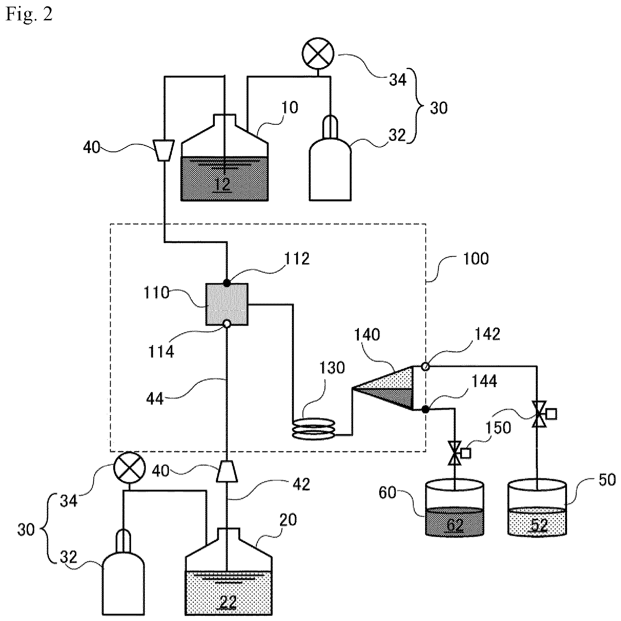

As shown in Fig. 2, as the liquid raw material feeding means of the apparatus of the present embodiment, a pressurized gas feeding means 30 for the raw material tank 10 is provided, and a pressurized gas is introduced into the raw material tank 10 by the pressurized gas feeding means 30, so that the liquid raw material 12 can be taken out from the raw material tank 10, which is the same as in the case of the solvent tank 20 described later. When the liquid raw material 12 is supplied to two or more predetermined number of extraction units 100 by pumps 14, the predetermined number of pumps 14 are required. When the apparatus of the present embodiment is provided with the pressurized gas feeding means 30 for the raw material tank 10, the pumps 14 of the predetermined number are not necessary. Therefore, the cost of the apparatus of the present embodiment can be reduced, and the apparatus structure can be simplified.

The liquid raw material 12 can be, for example, an intended substance (a reactant) produced by using the apparatus described in the Patent Document 5.

With the apparatus described in the Patent Document 5, liquid raw materials 12 stored in the two raw material tanks 10 can be mixed by a mixer 110, and then a reactant containing an intended substance can be obtained in a pipe. The reactant obtained by reacting substances contained in two kinds of liquid raw materials 12 can be used as a liquid raw material 12 of present embodiment. Specifically, it is as follows.

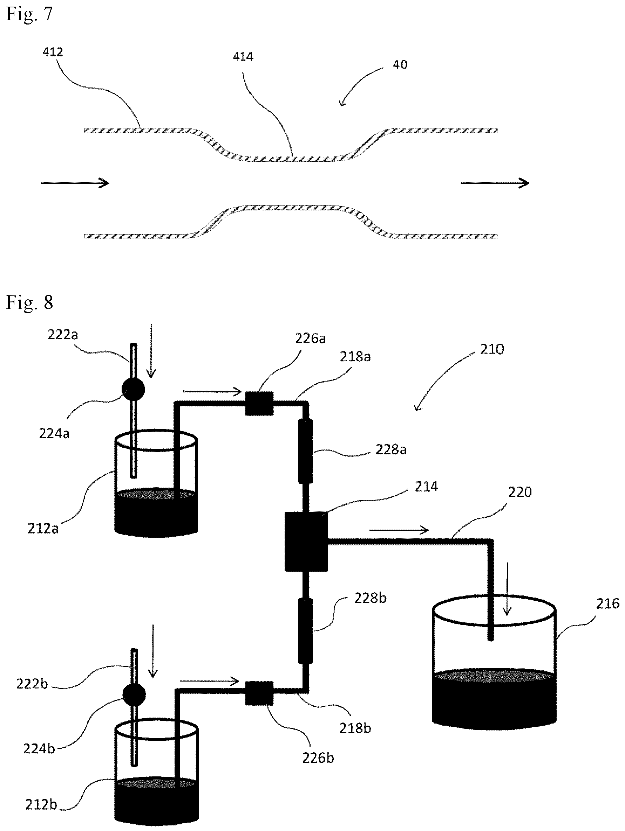

Fig. 8 shows an example of the flow of the microchemical plant described in the Patent Document 5. In the present embodiment, this microchemical plant can be used as a reaction apparatus 210.

As shown in Fig. 8, the reaction apparatus 210 for producing a reactant has two raw material tanks 212a and 212b for the reaction apparatus, a mixer 110 for the reaction apparatus, and a reactant tank 216. The raw material tanks 212a and 212b for the reaction apparatus are tanks for storing two kinds of liquid raw materials. The liquid raw materials sent from the raw material tanks 212a and 212b for the reaction apparatus are mixed by a mixer 110 for the reaction apparatus. A reactant obtained by mixing the liquid raw materials is stored in the reactant tank 216. The raw material tank 212a and the mixer 110 for the reaction apparatus are connected by a pipe 218a. The raw material tank 212b and the mixer 110 for the reaction apparatus are connected by a pipe 218b. The mixer 110 for the reaction apparatus and the reactant tank 216 are connected by a pipe 220.

The pipes 218a and 218b connecting the raw material tanks 212a and 212b and mixer 110 for the reaction apparatus are respectively provided with small diameter portions 228a and 228b for the reaction apparatus. The small diameter portions 228a and 228b for the reaction apparatus can be tubes having an inner diameter smaller than the inner diameter of the pipe on the upstream and/or downstream sides. The small diameter portions 228a and 228b for the reaction apparatus can be similar to a small diameter portion 40 of the apparatus of the present embodiment described below.

The reaction apparatus 210 is an apparatus that can mix two kinds of liquid materials. By mixing and reacting two kinds of materials, a desired reactant can be obtained.

The reaction apparatus 210 has a nitrogen tank (not shown in the figure). Nitrogen gas (N₂ gas) can be supplied from the nitrogen tank into the two raw material tanks 212a and 212b for the reaction apparatus. The nitrogen tank and the raw material tanks 212a and 212b for the reaction apparatus are connected to each other by nitrogen feeding pipes 222a and 222b for the reaction apparatus . The nitrogen feeding pipes 222a and 222b for the reaction apparatus are respectively provided with pressure regulating valves 224a and 224b (regulators) for the reaction apparatus. The pressure regulating valves 224a and 224b for the reaction apparatus maintain constant pressure of the nitrogen gas in the raw material tanks 212a and 212b for the reaction apparatus. The pressure regulating valves 224a and 224b for the reaction apparatus adjust the flow rate of the liquid raw material transferred from the two raw material tanks 212a and 212b for the reaction apparatus to the mixer 110 for the reaction apparatus. The pressure range of the gas supplied to the raw material tanks 212a and 212b for the reaction apparatus is 1 kPa to 200 MPa, preferably 10 kPa to 15 MPa.

The reaction apparatus 210 shown in Fig. 8 shows recovery of the reactant into the reactant tank 216. In the apparatus of the present embodiment, the pipe 220 of the reaction apparatus 210 can be connected to the first inlet hole 112 of the mixer 110 in Fig. 1 of the present embodiment. As a result, the reaction apparatus 210 shown in Fig. 8 can be used instead of the raw material tank 10 shown in Fig. 1. In this case, the reactant produced by the reaction apparatus 210 shown in Fig. 8 becomes the liquid raw material 12 of the apparatus of the present embodiment. The reactant tank 216 shown in Fig. 8 can also be used as the raw material tank 10 of the apparatus of the present embodiment.

### <<Solvent tank 20>>

As shown in Fig. 1, the apparatus of the present embodiment has a solvent tank 20 for storing a solvent 22. The solvent 22 is a liquid for extracting an extraction target substance from the liquid raw material 12.

The solvent tank 20 is not limited as long as it can store the solvent 22. For example, a metal, resin or glass tank can be used.

The solvent tank 20 of the apparatus of the present embodiment is preferably a pressure tank. A pressure tank made of SUS or polyethylene can be used as the solvent tank 20. By using a pressure tank as the solvent tank 20, the inside of the solvent tank 20 can be maintained at a high pressure. Therefore, it is possible to easily remove the solvent 22 from the solvent tank 20 at a low cost by using the pressurized gas feeding means 30 described later.

### <<Pressurized gas feeding means 30>>

As shown in Fig. 1, the apparatus of the present embodiment includes a pressurized gas feeding means 30 for supplying pressurized gas to the solvent tank 20. In the apparatus of the present embodiment, the pressurized gas feeding means 30 can include a high pressure gas feeding portion 32 and a pressure regulating portion 34.

In the apparatus of the present embodiment, the pressurized gas feeding means 30 can be provided for supplying pressurized gas to the raw material tank 10 as well as the solvent tank 20. Therefore, in the apparatus of the present embodiment, in addition to the pressurized gas feeding means 30 for the solvent tank 20, a pressurized gas feeding means 30 for the raw material tank 10 can be provided separately. In addition, there is one pressurized gas feeding means 30, which can be a common pressurized gas feeding means 30 for the solvent tank 20 and the raw material tank 10.

The method of extracting a liquid by the pressurized gas feeding means 30 is inexpensive and convenient compared with a method of using a pump 14 or the like. However, the method of extracting a liquid by the pressurized gas feeding means 30 is difficult to strictly control a flow rate compared with the method of using a pump 14 or the like. It is not necessary to strictly control the flow rate of the solvent 22 when extracting an extraction target substance by the apparatus of the present embodiment. Therefore, the method of extracting a liquid by the pressurized gas feeding means 30 can be preferably used to extract the solvent 22 from the solvent tank 20.

On the other hand, it is sometimes necessary to strictly control the liquid raw material 12 when extracting an extraction target substance by the apparatus of the present embodiment. In such a case, it is preferable to use a pump 14, such as a syringe pump 14 and a plunger pump 14, which can strictly control a flow rate, to extract the liquid raw material 12 from the raw material tank 10. However, if it is not necessary to strictly control the flow rate of the liquid raw material 12, a relatively low-cost and simple method of extracting the liquid by the pressurized gas feeding means 30 can be used to extract the liquid raw material 12 from the raw material tank 10.

A nitrogen tank, for example, can be used as the high pressure gas feeding portion 32 of the pressurized gas feeding means 30. Nitrogen gas (N₂ gas) can be supplied from the nitrogen tank into the solvent tank 20 (and the raw material tank 10 if necessary). The nitrogen tank and the solvent tank 20 (and the raw material tank 10 if necessary) are connected by a nitrogen feeding pipe 36. The nitrogen feeding pipe 36 has a pressure regulating valve as the pressure regulating portion 34. The pressure regulating valve can regulate a pressure of the nitrogen gas in the solvent tank 20 (and the raw material tank 10 if necessary).

The nitrogen gas corresponds to "a gas" in the present embodiment. The nitrogen tank, the pressure regulating valve and the nitrogen feeding pipe 36 for supplying the nitrogen gas correspond to "a pressurized gas feeding means 30" of the present embodiment. The pressure regulating valve for regulating the pressure of the nitrogen gas filled in the solvent tank 20 (and the raw material tank 10 if necessary) corresponds to "a pressure regulating portion 34" of the present embodiment. The pressure regulating valve can regulate the flow rate of the solvent 22 (and the liquid raw material 12 if necessary) transferred from the solvent tank 20 (and the raw material tank 10 if necessary). As the gas, a gas other than nitrogen gas can be used, such as compressed air or an inert gas. Since the nitrogen gas is relatively inexpensive and less dangerous, it is preferable to use the nitrogen gas as the pressurized gas.

The pressure inside the solvent tank 20 and the first solvent pipe 42 is preferably 1.5 MPa or less. The pressure range of the gas supplied to the solvent tank 20 (and the raw material tank 10 if necessary) is more preferably 1 kPa to 1 MPa, and preferably 10 kPa to 500 kPa.

The solvent tank 20 contains the solvent 22. The space above the stored solvent 22 is filled with the nitrogen gas. The pressure of the nitrogen gas present above the solvent 22 allows the solvent 22 to be transferred from the solvent tank 20 to the small diameter portion 40 described below via a pipe. In other words, the solvent tank 20 can transfer the solvent 22 to the next device by the pressure of the nitrogen gas (the gas) filled inside. When a liquid extraction method using the pressurized gas feeding means 30 is used to remove the liquid raw material 12 from the raw material tank 10, the liquid raw material 12 can be similarly transferred to the next device by the pressure of the nitrogen gas (the gas) for the liquid raw material 12 in the raw material tank 10.

### <<Small diameter portion 40>>

As shown in Fig. 1, the apparatus of the present embodiment includes a small diameter portion 40. One end of the small diameter portion 40 is connected to the solvent tank 20 by the first solvent pipe 42, and the other end of the small diameter portion 40 is connected to the second solvent pipe 44. The inner diameter of the small diameter portion 40 is smaller than the inner diameters of the first solvent pipe 42 and the second solvent pipe 44. Appropriate inner diameter and length of the small diameter portion 40 can control a flow rate of a fluid such as the solvent 22 flowing through the small diameter portion 40.

When using the pressurized gas feeding means 30 to extract a liquid from the solvent tank 20, it is essential to use the small diameter portion 40. The flow rate of the solvent 22 can be controlled by the combination of the pressurized inside solvent tank 20 and the small diameter portion 40. Similarly, when using pressurized the gas feeding means 30 to extract the liquid raw material 12 from the raw material tank 10, a flow rate of the liquid raw material 12 can be controlled using the small diameter portion 40.

The first solvent pipe 42 connecting solvent tank 20 and the small diameter portion 40 can be, for example, a PTFE (polytetrafluoroethylene) tube. The first solvent pipe 42 can be provided with an on-off valve (not shown in the figures). The on-off valve is a valve for controlling ON/OFF of the solvent 22 flowing inside the first solvent pipe 42. The on-off valve can be, for example, a solenoid valve. It is preferable that the pressure inside the first solvent pipe 42 connecting the raw material tank 10 and the small diameter portion 40 does not exceed the permissible pressure of the on-off valve. When the on-off valve is configured by a solenoid valve, the internal pressure of the first solvent pipe 42 connecting the raw material tank 10 and the small diameter portion 40 is preferably 1.5 MPa or less, and more preferably 0.8 MPa or less.

The second solvent pipe 44 is connected to the other end of the small diameter portion 40 (the end opposite to the end to which the first solvent pipe 42 is connected). The second solvent pipe 44, like the first solvent pipe 42, can be a PTFE (polytetrafluoroethylene) tube, for example.

The second solvent pipe 44 is connected to the extraction unit 100 described later. The second solvent pipe 44 between the small diameter portion 40 and the extraction unit 100 can be provided with a flow rate fine adjustment valve (not shown in the figures) for fine adjustment of the flow rate of the solvent 22. By arranging the flow rate fine adjustment valve, the flow rate of the solvent 22 can be controlled more precisely.

In the apparatus of the present embodiment, the inner diameter of the first solvent pipe 42 and the second solvent pipe 44 is preferably 0.1 mm to 20 mm, more preferably 0.2 mm to 10 mm, and further more preferably 0.5 mm to 2 mm. Since the inner diameters of the first solvent pipe 42 and the second solvent pipe 44 have the predetermined dimensions, the transfer of the solvent 22 can be performed smoothly. In addition, pipes with the inner diameter described above can be used as pipes other than the first solvent pipe 42 and the second solvent pipe 44.

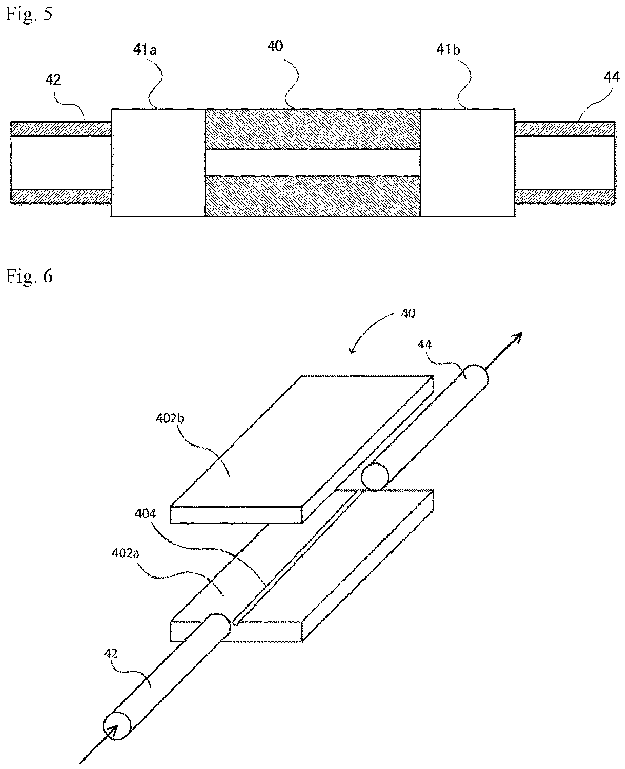

A small diameter portion 40 is arranged between the first solvent pipe 42 and the second solvent pipe 44. The inner diameter of the small diameter portion 40 (the inner diameter of the channel through which the solvent 22 flows) is smaller than the inner diameters of the first solvent pipe 42 and the second solvent pipe 44. As the small diameter portion 40, a tube having an inner diameter smaller than the inner diameters of the first solvent pipe 42 and the second solvent pipe 44 connected to the small diameter portion 40 can be used. The inner diameter of the small diameter portion 40 is preferably 0.01 mm to 1.0 mm in diameter, for example. The small diameter portion 4 can be a PEEK (polyetheretherketone) tube having an inner diameter of 0.2 mm, for example. As shown in Fig. 5, the first solvent pipe 42 and the small diameter portion 40 can be connected by a connector 41a. The second solvent pipe 44 and the small diameter portion 40 can be connected by a connector 41b.

The length of the small diameter portion 40 may be appropriately selected to control a flow rate of a fluid such as the solvent 22 flowing through the small diameter portion 40. Specifically, the length of the small diameter portion 40 is preferably 10 to 500 mm, more preferably 30 to 400 mm, and further more preferably 50 to 300 mm.

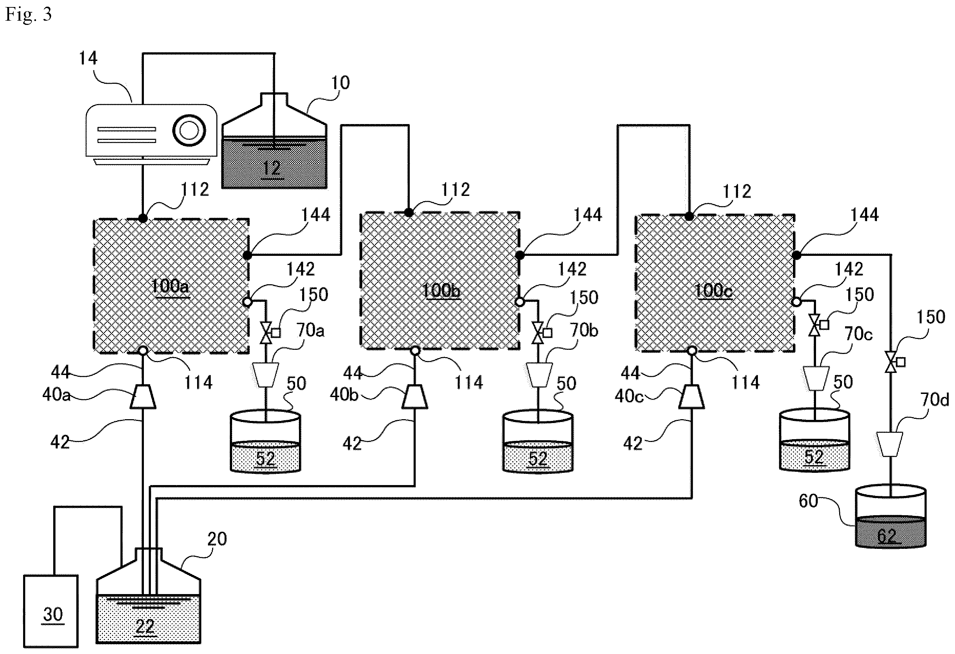

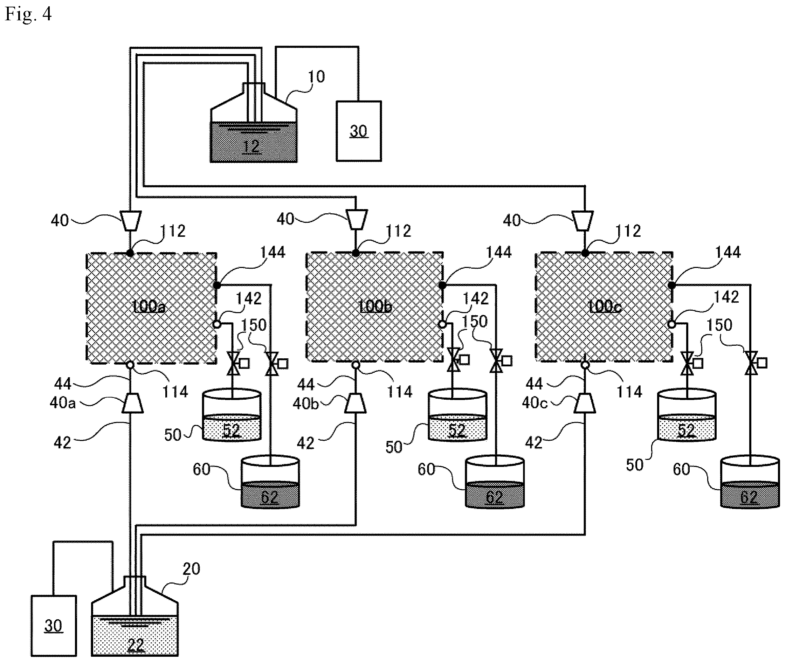

Fig. 1 shows an example in which one solvent tank 20 and one small diameter portion 40 are connected by one first solvent pipe 42. In other embodiments of the present embodiment, two or more first solvent pipes 42 from one solvent tank 20 can be connected to two or more small diameter portions 40 respectively (See Fig. 3 and Fig. 4). That is, a plurality of first solvent pipes 42 exist in branches or parallel from the solvent tank 20, and the solvent tank 20 and a plurality of small diameter portions 40 can be connected by each of the first solvent pipes 42 existing in branches or parallel.

The small diameter portion 40 will be further described below.

The small diameter portion 40 can be a valve. For example, a valve with a valve body or a spool that can adjust the channel size can be used as the small diameter portion 40. For example, a gate valve or a glove valve can be used as the small diameter portion 40. Specifically, a needle valve (manufactured by IDEX, Model Number P-445) that can adjust the channel size can be used as the small diameter portion 40.

The small diameter portion 40 can be an orifice. For example, an orifice formed on a thin resin or metal plate with an opening smaller than the inner diameter of the first solvent pipe 42 and the second solvent pipe 44 can be used as the small diameter portion 40. The orifice can be a single opening formed on a single plate, or multiple openings formed on a single plate. For example, HPLC or an in-line filter for ion chromatography can be used as the small diameter portion 40. Specifically, a PEEK pre-column filter for HPLC (manufactured by Shimadzu GLC Ltd.) can be used as the small diameter portion 40.

As shown in Fig. 6, the small diameter portion 40 can be manufactured by forming a microchannel 404 on one surface of a metal plate 402a and superposing another metal plate 402b on the surface of the metal plate 402a on which the microchannel 404 is formed. That is, the small diameter portion 40 may be formed by forming a microchannel 404 on a metal plate 402a in the same manner as the micromixer 110 described above. The microchannel 404 has an inner diameter smaller than the inner diameters of the upstream side pipe (first solvent pipe 42) and the downstream side pipe (second solvent pipe 44) of the small diameter portion 40.

As shown in Fig. 7, the small diameter portion 40 may be formed by physically deforming a metal or resin tube 412 to partially reduce the inner diameter of the tube 412. The inner diameter of the deformed part 414 of the tube 412 has an inner diameter smaller than the inner diameter of first solvent pipe 42 and second solvent pipe 44 on the upstream side and/or downstream side.

In the apparatus of the present embodiment, as shown in Fig. 1, the small diameter portion 40 preferably further includes a temperature controller 46 to control the temperature of the small diameter portion 40. By controlling the temperature of the small diameter portion 40, the temperature of the solvent 22 in the small diameter portion 40 can be controlled. By controlling the temperature of the solvent 22, physical properties such as viscosity of the solvent 22 can be changed, and therefore, the flow rate of the solvent 22 in the small diameter portion 40 can be controlled.

The pressure inside the first solvent pipe 42 connecting the solvent tank 20 and the small diameter portion 40 preferably does not exceed the permissible pressure of the on-off valve when the on-off valve is arranged in the first solvent pipe 42. When the on-off valve is configured by a solenoid valve, the pressure inside the first solvent pipe 42 connecting the solvent tank 20 and the small diameter portion 40 is preferably 1.5 MPa or less, and more preferably 0.8 MPa or less.

When the liquid extraction method using the pressurized gas feeding means 30 is used to extract the liquid raw material 12 from the raw material tank 10, the small diameter portion 40 can be arranged in the middle of the pipe connecting the raw material tank 10 and the extraction unit 100 described below, similar to the case of the solvent tank 20 described above. By arranging the small diameter portion 40, a flow rate of the liquid raw material 12 transferring from the raw material tank 10 can be controlled.

### <<Extraction unit 100>>

The apparatus of the present embodiment includes at least one extraction unit 100 including a mixer 110, an extraction portion 130, and a liquid separating portion 140. The apparatus of the present embodiment may have multiple extraction units 100. In the example shown in Fig. 1, one extraction unit 100 is shown.

### (Mixer 110)

The extraction unit 100 of the apparatus of the present embodiment has a mixer 110. In this specification, the mixer 110 is sometimes referred to as "a mixing portion".

The mixer 110 has a first inlet hole 112 connected to the raw material tank 10 and a second inlet hole 114 connected to the small diameter portion 40 by a second solvent pipe 44. The mixer 110 can mix a liquid entering from the first inlet hole 112 and a liquid entering from the second inlet hole 114. In the example shown in Fig. 1, the liquid entering from the first inlet hole 112 is the liquid raw material 12 and the liquid entering from the second inlet hole 114 is the solvent 22. In the example shown in Fig. 1, the liquid raw material 12 and the solvent 22 can be mixed by joining them in mixer 110.

When the extraction units 100 are plural, at least one raw material tank 10 is connected to the first inlet hole 112 of mixer 110 of extraction units 100.

The mixer 110 is not particularly limited as long as it can mix two kinds of liquids (the liquid raw material 12 and the solvent 22), and any mixer 110 can be used. As a mixer 110, for example, a well-known metal, resin, or glass micromixer can be used. A micromixer is a mixer provided with a microchannel for mixing a plurality of liquid raw materials 12. The micromixer can be manufactured, for example, by forming a microchannel on one surface of a metal plate and superposing another metal plate on the surface of the metal plate on which the microchannel is formed. There is no particular restriction on the shape of the microchannel. For example, a mixer with a T-shaped microchannel or a mixer with a Y-shaped microchannel can be used.

In the apparatus of the present embodiment, the mixer 110 has a microchannel, and the width (or the diameter) of the microchannel is preferably from 0.01 µm to 20 mm, more preferably from 0.01 mm to 10 mm, and further more preferably from 0.1 mm to 5 mm. When the width (or the diameter) of the microchannel of the mixer 110 is within the predetermined range, the liquid raw material 12 and the solvent 22 can be mixed efficiently.

In the mixer 110, the diameter of the pipe of the liquid raw material 12 and the pipe of solvent 22 on upstream side from the point where the liquid raw material 12 and the solvent 22 join together is preferably from 0.01 µm to 20 mm, more preferably from 0.01 mm to 10 mm, and further more preferably from 0.1 mm to 5 mm.

In the mixer 110, the diameter of the pipe of the mixed liquid of the liquid raw material 12 and the solvent 22 on downstream side from the point where the liquid raw material 12 and the solvent 22 join together is preferably from 0.01 µm to 20 mm, more preferably from 0.01 mm to 10 mm, and further more preferably from 0.1 mm to 5 mm. When the diameter of the pipe of the mixer 110 is within the above-mentioned range, the liquid raw material 12 and the solvent 22 can be mixed more efficiently.

The two liquids (the liquid raw material 12 and the solvent 22) mixed in the mixer 110 are preferably in a slug flow and transferred to an extraction portion 130 on the downstream. When the liquid raw material 12 and the solvent 22 becomes a slug flow, an extraction target substance dissolved in the liquid raw material 12 can be extracted to the solvent 22 with high efficiency.

Specific example of a mixer 110 is as follows. The shape of the channel of the mixer 110 may include a channel consisting of a concave groove or a slit-like through hole provided in a substrate. The channel may have a shape capable of mixing two kinds of liquids. The mixer 110 of the apparatus of the present embodiment may have two liquid inlets (the first inlet hole 112 and the second inlet hole 114), two inflow paths connected to the inlets, a joining point where the two inflow paths join together, one conveyance path connected to the joining point, and one outlet connected to the conveyance path. The mixing portion may be Y-shaped. The inflow paths and the conveyance path may consist of a bottomed concave groove provided in the substrate. The concave groove may be formed into a channel by covering it with a protective member or the like and sealing it.

### (Extraction portion 130)

The extraction unit 100 of the apparatus of the present embodiment has an extraction portion 130.

The extraction portion 130 is connected to the downstream side of the mixer 110. In the extraction portion 130, the extraction target substance can be extracted from the liquid raw material 12 to the solvent 22.

The extraction portion 130 can be a pipe such as a tube having a predetermined diameter and length connected to the mixer 110. The extraction portion 130 can be, for example, a tube made of PTFE (polytetrafluoroethylene).

The extraction portion 130 can be a plate-like structure in which channels of predetermined dimensions (width and depth) are formed on a plate-like surface such as grooves on a flat plate.

It is preferable that the liquid raw material 12 and the solvent 22 mixed in mixer 110 become slug flow in the extraction portion 130. When a mixed liquid of the liquid raw material 12 and the solvent 22 becomes slug flow in the extraction portion 130, it flows through extraction portion 130 while a liquid raw material phase and a solvent phase are maintained and each phase circulates internally. As a result, the liquid raw material 12 and the solvent 22 are supplied to the interface between the liquid raw material phase and the solvent phase from insides of the liquid raw material phase and the solvent phase, respectively. As a result, the migration (extraction) of the extraction target substance in the liquid raw material 12 to the solvent phase can be promoted. Therefore, since the liquid raw material 12 and the solvent 22 become slug flow, the extraction target substance can be efficiently extracted from the liquid raw material 12 to the solvent 22. By controlling the ratio of the respective flow rates of the liquid raw material 12 and the solvent 22, the inner diameter and the length of the extraction portion 130, and the flow rate of the mixed liquid of the liquid raw material 12 and the solvent 22 in the extraction portion 130, the mixed liquid of the liquid raw material 12 and the solvent 22 can be slug flow at the extraction portion 130.

The inner diameter or the size of the extraction portion 130 is preferably 0.1 to 20 mm, more preferably 0.2 to 10 mm, and further more preferably 0.5 to 5 mm. Since the inner diameter or the size of the extraction portion 130 is within the predetermined range, the two liquids (the liquid raw material 12 and the solvent 22) mixed in mixer 110 can be slug flow. As a result, the extraction target substance dissolved in the liquid raw material 12 can be efficiently extracted into the solvent 22 in the extraction portion 130. When the inner diameter or the size of the extraction portion 130 is large, the extraction efficiency tends to decrease. When the inner diameter or the size of the extraction portion 130 is small, the productivity decreases, and the pressure loss becomes too large, so high pressure is required to flow the liquid, which is uneconomical. In order to extract the extraction target substance efficiently, the inner diameter or the size of the extraction portion 130 is preferably constant in the longitudinal direction.

The length of the extraction portion 130 is preferably 0.5 to 10 m, more preferably 1 to 5 m, and further more preferably 2 to 4 m. When the length of the extraction portion 130 is shorter than the predetermined range, the migration (the extraction) of the extraction target substance to the solvent phase becomes insufficient. When the length of the extraction portion 130 is longer than the predetermined range, the pressure loss in the extraction portion 130 becomes too large. Therefore, high pressure is required to flow the liquid, which is uneconomical.

### (Liquid separating portion 140)

The extraction unit 100 of the apparatus of the present embodiment has a liquid separating portion 140.

The liquid separating portion 140 is connected to the extraction portion 130. In the liquid separating portion 140, a first recovered liquid 52 containing the solvent 22 and the extraction target substance is separated from a second recovered liquid 62 other than the first recovered liquid 52. The liquid separating portion 140 has a first outlet hole 142 and a second outlet hole 144. The first recovered liquid 52 containing the solvent 22 and the extraction target substance flows out from the first outlet hole 142. The second recovered liquid 62 separated from the first recovered liquid 52 flows out from the second outlet hole 144. The extraction target substance can be recovered by separating the first recovered liquid 52 containing the solvent 22 and the extraction target substance in the liquid separating portion 140.

In this specification, the solvent 22 containing the extraction target substance (i.e., a liquid containing the solvent 22 and the extraction target substance) extracted in the extraction portion 130 is referred to as "a first recovered liquid 52". In this specification, a liquid separated from the first recovered liquid 52 (for example, a liquid with the liquid raw material 12 as a main component) is referred to as "a second recovered liquid 62".

A settler can be used as the liquid separating portion 140. The settler is an apparatus for separating into a light liquid phase and a heavy liquid phase. Since the specific gravity of the solvent 22 and the liquid raw material 12 is different from each other, the solvent 22 containing the extraction target substance (the first recovered liquid 52) extracted in the extraction portion 130 and the other liquid (the second recovered liquid 62) can be separated by the settler.

An example will be described below in the case the settler is used as the liquid separating portion 140.

The settler can have a separation compartment. A shape of the separation compartment may be such that a plurality of mixed liquids can be stored and separated by specific gravity. In the apparatus of the present embodiment, for example, a settler having a separation compartment described in the Patent Document 6 can be used as the settler.

In the apparatus of the present embodiment, when a hydrophilic liquid raw material 12 is used as the liquid raw material 12, a hydrophobic solvent 22 is preferably used as the solvent 22 for extracting the extraction target substance from the liquid raw material 12. In the apparatus of the present embodiment, when a hydrophobic liquid raw material 12 is used as the liquid raw material 12, a hydrophilic solvent 22 is preferably used as the solvent 22 for extracting the extraction target substance from the liquid raw material 12. As a result, a liquid originating from liquid raw material 12 (the second recovered liquid 62) and a liquid originating from solvent 22 (the first recovered liquid 52) can be separated in the liquid separating portion 140. The specific gravity of the liquid raw material 12 is preferably different from the specific gravity of the solvent 22. A liquid with high specific gravity moves toward the lower part of the separation compartment, and liquid with low specific gravity moves toward the upper part of the separation compartment. In the example shown in Fig. 1, the first recovered liquid 52 containing the solvent 22 and the extraction target substance moves toward the upper part of the separation compartment, and the second recovered liquid 62 containing much of the liquid raw material 12 moves toward the upper part of the separation compartment. However, depending on the relationship between the specific gravity of the liquid raw material 12 and the solvent 22, the first recovered liquid 52 may move toward the lower part of the separation compartment, and second recovered liquid 62 may move toward the upper part of the separation compartment. In the present embodiment, an example of the case where the specific gravity of liquid raw material 12 is higher than the specific gravity of solvent 22 will be described.

As shown in Fig. 1, the mixed liquid discharged from the extraction portion 130 is supplied from the inlet to the separation compartment and stored. The separation compartment stores the mixed liquid and separates the mixed liquid. An outlet connected to the first outlet hole 142 is installed in the upper part of the separation compartment. The first recovered liquid 52 with relatively low specific gravity located in the upper part of the liquid separated in the separation compartment is discharged from the upper outlet to outside of the settler (the liquid separating portion 140). An outlet connected to the second outlet hole 144 is installed in the lower part of the separation compartment. The second recovered liquid 62 with relatively high specific gravity located in the lower part of the liquid separated in the separation compartment is discharged from the lower outlet to outside of the settler (the liquid separating portion 140).

The first recovered liquid 52 and the second recovered liquid 62 discharged from the settler (the liquid separating portion 140) are discharged from the first outlet hole 142 and the second outlet hole 144 of the extraction unit 100 to outside of the extraction unit 100.

### <<First recovering tank 50>>

The apparatus of the present embodiment includes a first recovering tank 50 for recovering the first recovered liquid 52, which is connected to the first outlet hole 142 of the extraction unit 100.

The first recovering tank 50 is not particularly limited as long as it can store the first recovered liquid 52 that is mainly the solvent 22. The first recovering tank 50 can be composed of, for example, a metal, resin or glass tank.

A valve 150 that can adjust a flow rate can be provided between the first outlet hole 142 and the first recovering tank 50. The valve 150 allows fine adjustment of the flow rate of the first recovered liquid 52 flowing out from the liquid separating portion 140 of the extraction unit 100, thereby facilitating adjustment of the liquid level in the separation compartment.

### <<Second recovering tank 60>>

The apparatus of the present embodiment includes a second recovering tank 60 for recovering the second recovered liquid 62, which is connected to the second outlet hole 144 of the extraction unit 100.

The second recovering tank 60 is not particularly limited as long as it can store the second recovered liquid 62. The second recovering tank 60, like the first recovering tank 50, can be composed of a metal, resin or glass tank, for example.

A valve 150 that can adjust a flow rate can be provided between the second outlet hole 144 and the second recovering tank 60. The valve 150 allows fine adjustment of the flow rate of the second recovered liquid 62 flowing out from the liquid separating portion 140 of the extraction unit 100, thereby facilitating adjustment of the liquid level in the separation compartment.

The operation and effect of the first embodiment configured as described above will be described.

In the conventional apparatus, expensive syringe pumps and/or plunger pumps were required to transfer a liquid raw material 12 and a solvent 22 for extraction of an extraction target substance. Therefore, the production cost of the entire apparatus became enormous, and the apparatus structure became complicated.

According to the apparatus of the present embodiment, since the solvent 22 can be transferred by the pressure of a gas such as nitrogen gas filled in the solvent tank 20, syringe pumps and/or plunger pumps are unnecessary. Therefore, the production cost of the entire apparatus can be greatly reduced, and the apparatus structure can be simplified. When the liquid raw material 12 is transferred by the pressure of gas such as nitrogen gas in the raw material tank 10, the production cost of the entire apparatus can be further reduced, and a structure of the apparatus can be further simplified.

According to the apparatus of the present embodiment, since the pressure of nitrogen gas in the raw material tank 10 can be maintained constant by pressure regulating valve, the flow rate of the solvent 22 (and the liquid raw material 12) flowing through the pipe can be prevented from fluctuating.

Furthermore, the pipe connecting the solvent tank 20 (and the raw material tank 10) and mixer 110 of the extraction portion 130 has a small diameter portion 40. A pressure loss of a liquid flowing through the small diameter portion 40 can be adjusted. By adjusting the pressure loss, a flow rate of the solvent 22 (and the liquid raw material 12) flowing through the pipe can be adjusted. As a result, the flow rate of the solvent 22 (and the liquid raw material 12) flowing through the pipe can be maintained constant. In addition, a contact between the liquid raw material 12 and the solvent 22 can be properly controlled in the extraction portion 130 of the extraction unit 100, and the extraction target substance dissolved in the liquid raw material 12 can be stably extracted.

### <Second embodiment>

The second embodiment of the present embodiment is a cleaning apparatus. Fig. 3 shows a schematic diagram of the cleaning apparatus of the second embodiment. In Fig. 3, details of the interior of the three extraction units 100a, 100b, 100c are omitted, but they are the same as the extraction unit 100 of the first embodiment described above. As described in the description of the first embodiment, the three extraction units 100a, 100b, 100c include a mixer 110, an extraction portion 130, and a liquid separating portion 140, respectively.

The cleaning apparatus of the present embodiment has at least two extraction units 100 connected in series. By connecting at least two extraction units 100 in series, more contaminant contained in the liquid raw material 12 can be extracted. As a result, cleaning of the liquid raw material 12 can be performed more reliably. Moreover, since cleaning is performed continuously, the contamination can be suppressed. The number N of the extraction units 100 connected in series is preferably 2 to 10, and more preferably 3 to 7. When the number N is large, the number of pumps required can be reduced by transferring the solvent 22 (and the liquid raw material 12) using the pressurized gas feeding means 30.

In the example shown in Fig. 3, the cleaning apparatus has three extraction units 100a, 100b, 100c. In the cleaning apparatus of the second embodiment, the raw material tank 10 is connected to the first inlet hole 112 of the mixer 110 of the extraction unit 100a on the most upstream. In the cleaning apparatus of the second embodiment, in a pair of extraction units 100 (for example, adjacent extraction units 100a and 100b) connected in series, the second outlet hole 144 of the extraction unit 100a on the upstream side is connected to the first inlet hole 112 of the mixer 110 of the extraction unit 100b on the downstream side. The same applies to the extraction units 100b and 100c connected in series. In the cleaning apparatus of the second embodiment, the solvent tank 20 is connected to the mixer 110 of at least two extraction units 100 (in the case of Fig. 3, the three extraction units 100a, 100b, 100c) via the small diameter portion 40 (in the case of Fig. 3, the three small diameter portions 40a, 40b, 40c).

The liquid pressure in the first inlet hole 112 of the mixer 110 of the extraction unit 100 on the upstream side is preferably higher than the liquid pressure in the first inlet hole 112 of the mixer 110 of the extraction unit 100 on the downstream side. Specifically, in the example shown in Fig. 3, when liquid pressures in the first inlet holes 112 of the mixers 110 of the extraction units 100a, 100b, 100c are P1, P2, and P3, respectively, P1 > P2 > P3 is preferable. By making the liquid pressures such as this, the liquid flow in the apparatus of the present embodiment can be appropriately controlled.

In the cleaning apparatus of the second embodiment, the small diameter portions 40 connected to the second inlet holes 114 can be small diameter portions 40 with different pressure losses in the small diameter portion 40a on the upstream side and the small diameter portion 40b on the downstream side (or the small diameter portion 40b on the upstream side and the small diameter portion 40c on the downstream side). By having different pressure losses in the plurality of the small diameter portions 40a, 40b, 40c, the flow rate of the liquid raw material 12, the solvent 22, and the mixed liquid of the liquid raw material 12 and the solvent 22 in the apparatus can be controlled so that the flow rate is appropriate. As a result, the contaminant (the extraction target substance) contained in the liquid raw material 12 can be efficiently extracted. Specifically, when the small diameter portions 40a, 40b, 40c are the same inner diameter and lengths of the small diameter portions 40a, 40b, 40c are L1, L2, and L3, respectively, it is preferable that L1 < L2 < L3. That is, it is preferable that the pressure loss of the solvent 22 in the small diameter portion 40 for supplying the solvent 22 to the extraction unit 100 on the downstream side is larger than the pressure loss in the small diameter portion 40 for supplying the solvent 22 to the extraction unit 100 on the upstream side.

In the apparatus of the present embodiment, similar to the first embodiment, it is preferable that the small diameter portions 40a, 40b, 40c further include temperature controllers 46 to adjust the temperature of the small diameter portions 40. By adjusting the temperature of the small diameter portions 40a, 40b, 40c, the temperature of the solvent 22 in the small diameter portions 40a, 40b, 40c can be controlled. By controlling the temperature of the solvent 22, the physical properties such as the viscosity of the solvent 22 can be changed, so that the flow rate of the solvent 22 can be controlled in each of the small diameter portions 40a, 40b, 40c. Note that the second small diameter portions 70a, 70b, 70c 70d described later can also include a temperature controller 46 in the same manner as the small diameter portions 40a, 40b, 40c.

In the example shown in Fig. 3, three pipes are connected to the solvent tank 20, and each pipe is connected to the mixer 110 of the different extraction unit 100. Since only one pressurized gas feeding means 30 is required for transferring the solvent 22 from the solvent tank 20, it is possible to reduce the cost of the apparatus of the present embodiment and simplify the structure of the apparatus.

In the cleaning apparatus of the second embodiment, the channel connecting the first recovering tank 50 and the second recovering tank 60 can be provided with second small diameter portions 70a, 70b, 70c, 70d. Depending on the height position of the pipe connecting the first recovering tank 50 and the second recovering tank 60, the flow rate flowing to the first recovering tank 50 and the second recovering tank 60 may become unstable. By providing the second small diameter portions 70a, 70b, 70c, 70d in the channel connecting the first recovering tank 50 and the second recovering tank 60, the flow rate flowing to the first recovering tank 50 and the second recovering tank 60 can be hardly changed, and the flow rate can be stabilized. The second small diameter portion can also be installed in the first embodiment described above.

Fig. 3 shows an example of using a pump 14 to transfer the liquid raw material 12. As described in the first embodiment, the liquid raw material 12 can also be transferred using the pressurized gas feeding means 30 in the cleaning apparatus of the second embodiment.

As described in the description of the first embodiment, by the reaction apparatus 210 shown in Fig. 8, a reactant which is the intended substance can be obtained in the pipe after the liquid raw materials stored in two of the raw material tanks 212a and 212b for the reaction apparatus is mixed by the mixer for the reaction apparatus. The reactant obtained by the reaction of the substances contained in the raw materials of the two liquids can be used as the liquid raw material 12 for the present embodiment. In the cleaning apparatus of the second embodiment, the reactant can be cleaned by extracting the contaminant from the reactant.

### <Third embodiment>

The third embodiment of the present embodiment is an extraction apparatus. The apparatus of the third embodiment of the present embodiment can use the apparatus shown in Fig. 3, similar to the apparatus of the second embodiment. The extraction apparatus of the third embodiment is similar to the apparatus of the second embodiment except that the extraction target substance contained in the liquid raw material 12 is an intended substance.

The extraction apparatus of the present embodiment has at least two extraction units 100 connected in series. By connecting at least two extraction units 100 in series, the intended substance contained in the liquid raw material 12 can be extracted more. As a result, the intended substances can be extracted more from the liquid raw material 12. The number N of the extraction units 100 connected in series is preferably 2 to 10, and more preferably 3 to 7. When the number N is large, the number of pumps 14 required can be reduced by transferring the solvent 22 (and the liquid raw material 12) using the pressurized gas feeding means 30.

Fig. 3 shows an example of using a pump 14 to transfer the liquid raw material 12. As described in the first embodiment, the liquid raw material 12 can also be transferred using the pressurized gas feeding means 30 in the extraction apparatus of the third embodiment.

In the apparatus of the present embodiment, similar to the first embodiment, it is preferable that the small diameter portions 40a, 40b, 40c further include temperature controllers 46 to adjust the temperature of the small diameter portions 40. By adjusting the temperature of the small diameter portions 40a, 40b, 40c, the temperature of the solvent 22 in the small diameter portions 40a, 40b, 40c can be controlled. By controlling the temperature of the solvent 22, the physical properties such as the viscosity of the solvent 22 can be changed. Therefore, the flow rate of the solvent 22 can be controlled in each of the small diameter portions 40a, 40b, 40c. The second small diameter portions 70a, 70b, 70c 70d can also have a temperature controller 46 in the same manner as the small diameter portions 40a, 40b, 40c.

Also, as described in the description of the first embodiment, by the reaction apparatus 210 shown in Fig. 8, a reactant which is the intended substance can be obtained in the pipe after the liquid raw materials stored in two of the raw material tanks 212a and 212b for the reaction apparatus is mixed by the mixer for the reaction apparatus. The reactant obtained by the reaction of the substances contained in the raw materials of the two liquids can be used as the liquid raw material 12 of the present embodiment. In the extraction apparatus of the third embodiment, the reactant that are intended substances can be extracted from the liquid raw material 12.

### <Fourth embodiment>

Fig. 4 shows a schematic diagram of the fourth embodiment of the present embodiment. In Fig. 4, the internal details of the extraction units 100a, 100b, 100c are omitted, but they are the same as the extraction unit 100 of the first embodiment described above. As described above, the three extraction units 100a, 100b, 100c include a mixer 110, an extraction portion 130, and a liquid separating portion 140, respectively. The apparatus of the fourth embodiment can be used as a cleaning apparatus or an extraction apparatus.

The apparatus of the present embodiment includes at least two extraction units 100 connected in parallel. The apparatus of the present embodiment is a so-called numbering-up apparatus. The amount of extraction of the extraction target substance per unit time can be increased by connecting at least two of the extraction units 100 in parallel. Therefore, the cost of extraction of the extraction target substance can be reduced.

In the example shown in Fig. 4, the apparatus includes three extraction units 100a, 100b, 100c. In the apparatus of the fourth embodiment, the raw material tank 10 connects to the first inlet hole 112 of the mixer 110 of the at least two extraction units 100. In the fourth embodiment, the solvent tank 20 connects to the second inlet hole 114 of the mixer 110 of at the least two extraction units 100 via the small diameter portion 40. By making the extraction units 100 parallel, the fourth embodiment can increase the extracting amount of the extraction target substance per unit time.

Fig. 4 shows an example of using the pressurized gas feeding means 30 to transfer the liquid raw material 12. As described in the first embodiment, the liquid raw material 12 can be transferred using a pump 14 in the fourth embodiment.

In the apparatus of the present embodiment, similar to the first embodiment, it is preferable that the small diameter portions 40a, 40b, 40c further include a temperature controller 46 to adjust the temperature. By adjusting the temperature of the small diameter portions 40a, 40b, 40c, the temperature of the solvent 22 in the small diameter portions 40a, 40b, 40c can be controlled. By controlling the temperature of the solvent 22, the physical properties such as the viscosity of the solvent 22 can be changed, so that the flow rate of the solvent 22 in the small diameter portions 40a, 40b, 40c can be controlled. Similar to the apparatus of the second and third embodiment, the apparatus of the fourth embodiment can have the second small diameter portions 70a, 70b, 70c 70d as shown in Fig. 3. If the fourth embodiment has the second small diameter portions 70a, 70b, 70c 70d, the second small diameter portions 70a, 70b, 70c 70d can also have the temperature controller 46 as well as the small diameter portions 40a, 40b, 40c.

Also, as described in the description of the first embodiment, by the reaction apparatus 210 shown in Fig. 8, a reactant which is the intended substance can be obtained in the pipe after the liquid raw materials stored in two of the raw material tanks 212a and 212b for the reaction apparatus is mixed by the mixer for the reaction apparatus. The reactant obtained by the reaction of the substances contained in the raw materials of the two liquids can be used as the liquid raw material 12 of the present embodiment. The apparatus of the fourth embodiment can be a cleaning apparatus for cleaning the reactant by extracting contaminant from the reactant. The apparatus of the fourth embodiment can be an extraction apparatus for extracting the reactant which is the intended substance from the liquid raw material 12.

### <Fifth embodiment>

An apparatus of a fifth embodiment of the present embodiment includes a set of extraction units 100 of the second embodiment and the third embodiment (a set of at least two extraction units 100 connected in series) as an extraction unit 100 instead of at least two extraction units 100 connected in parallel in the fourth embodiment. That is, the apparatus of the fifth embodiment is a combination of an apparatus of the second embodiment and the third embodiment, in which at least two extraction units 100 are connected in series, and an apparatus of the fourth embodiment, in which at least two extraction units 100 are connected in parallel.

The apparatus of the fifth embodiment can extract more of the extraction target substance contained in the liquid raw material 12 by connecting at least two extraction units 100 in series. As a result, cleaning of the liquid raw material 12 and extraction of the extraction target substance from the liquid raw material 12 can be performed more reliably. The fifth embodiment of the present embodiment can increase the extracting amount of the extraction target substance per unit time by connecting at least two extraction units 100 in parallel. Therefore, the extraction cost of the extraction target substance can be reduced.

As described in the first embodiment, the fifth embodiment can use the pressurized gas feeding means 30 to transfer liquid raw material 12. Also, as described in the first embodiment, the fifth embodiment can use a pump 14 to transfer the liquid raw material 12.

In the apparatus of the present embodiment, similar to the first embodiment, plural of the small diameter portions 40 are preferably provided with a temperature controller 46 to adjust the temperature. The second small diameter portions 70a, 70b, 70c 70d can also have a temperature controller 46 in the same manner as the small diameter portions 40a, 40b, 40c.

As described in the description of the first embodiment, by the reaction apparatus 210 shown in Fig. 8, a reactant which is the intended substance can be obtained in the pipe after the liquid raw materials stored in two of the raw material tanks 212a and 212b for the reaction apparatus is mixed by the mixer for the reaction apparatus. The reactant obtained by the reaction of the substances contained in the raw materials of the two liquids can be used as the liquid raw material 12 of the fifth embodiment. The apparatus of the fifth embodiment can be a cleaning apparatus for cleaning the reactant by extracting contaminant from the reactant. The apparatus of the fifth embodiment can be an extraction apparatus for extracting the reactant which is the intended substance from the liquid raw material 12.

In the apparatus of the fifth embodiment, the number N of the extraction units 100 connected in series and in parallel is preferably 2 to 10, and more preferably 3 to 7. When the number N is large, the number of pumps 14 required can be reduced by transferring the solvent 22 (and the liquid raw material 12) using the pressurized gas feeding means 30.

### <Sixth embodiment>

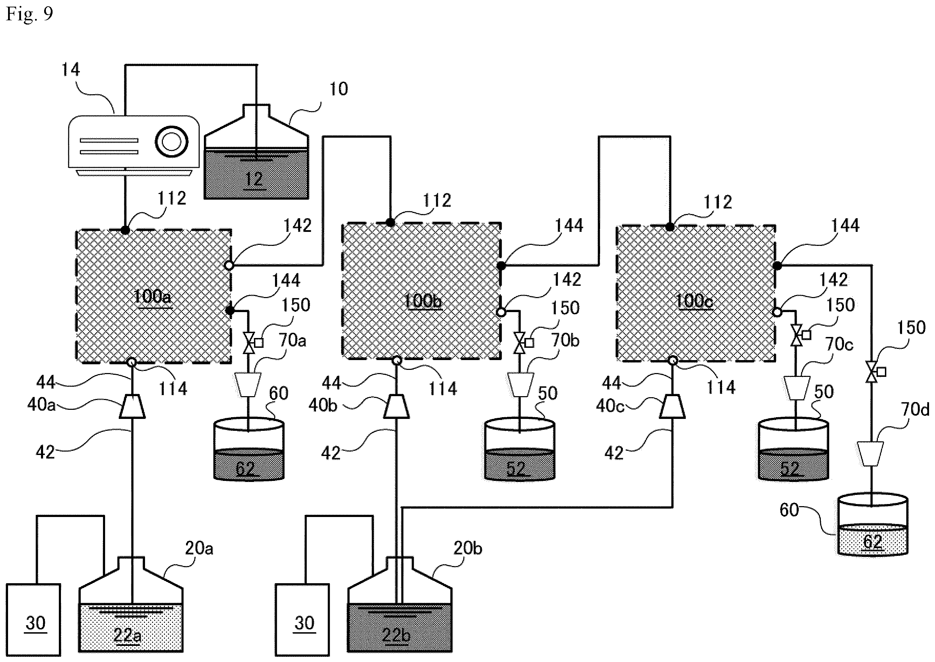

The sixth embodiment of the present embodiment is an extraction and cleaning apparatus that combines the functions of the extraction apparatus and the cleaning apparatus. The apparatus shown in Fig. 9 can be used for the apparatus of the sixth embodiment of the present embodiment. In Fig. 9, details of the interior of the three extraction units 100a, 100b, 100c are omitted, but they are the same as the extraction unit 100 of the first embodiment described above. As described in the description of the first embodiment, the three extraction units 100a, 100b, 100c include a mixer 110, an extraction portion 130, and a liquid separating portion 140 respectively.

The apparatus of the sixth embodiment of the present embodiment includes at least two extraction units 100 connected in series. The raw material tank 10 of the apparatus of the sixth embodiment is connected to the first inlet hole 112 of the mixer 110 of the extraction unit 100a on the most upstream. The apparatus of the sixth embodiment of the present embodiment preferably includes at least three extraction units 100 connected in series. The upper limit of the number of extraction units 100 is preferably 10 or less, and more preferably 5 or less.

In the apparatus of the sixth embodiment, in at least one pair of the extraction units 100 connected in series, the first outlet hole 142 of the extraction unit 100 on the upstream side is connected to the first inlet hole 112 of the mixer 110 of the extraction unit 100 on the downstream side. In the example shown in Fig. 9, the first outlet hole 142 of the extraction unit 100a on the most upstream is connected to the first inlet hole 112 of the mixer 110 of the extraction unit 100b on the downstream side. In this case, the extraction unit 100a can function as an extraction apparatus. Therefore, in the extraction unit 100a, the extraction target substance contained in the liquid raw material 12 is the intended substance. The intended substance extracted by the solvent 22a flows out from the first outlet hole 142 of the extraction unit 100a. The second recovering tank 60 is connected to the second outlet hole 144 of the extraction unit 100a. In the second recovering tank 60, the liquid (the second recovered liquid 62) after extraction of the intended substance from the liquid raw material 12 is recovered.

As shown in Fig. 9, in the apparatus of the sixth embodiment, the first outlet hole 142 of the extraction unit 100a on the most upstream is preferably connected to the first inlet hole 112 of the mixer 110 of the extraction unit 100b on the downstream side in the extraction unit 100a of the most upstream and the extraction unit 100b connected in series to the extraction unit 100a on the most upstream.

In the apparatus of the sixth embodiment, in at least one pair of the extraction units 100 connected in series, the second outlet hole 144 of the extraction unit 100 on the upstream side is preferably connected to the first inlet hole 112 of the mixer 110 of the extraction unit 100 on the downstream side. In the example shown in Fig. 9, the second outlet hole 144 of the second extraction unit 100b is connected to the first inlet hole 112 of the mixer 110 of the extraction unit 100c on the downstream side. The extraction unit 100b functions as a cleaning apparatus. Therefore, in the extraction unit 100b, the contaminant contained in the liquid is the intended substance. The liquid cleaned by the solvent 22b flows out from the second outlet hole 144 of the extraction unit 100b. The first outlet hole 142 of the extraction unit 100b is connected to the first recovering tank 50. The liquid (the first recovered liquid 52) containing the solvent 22b and the contaminant is recovered in the first recovering tank 50.

In the apparatus of the sixth embodiment, the extraction unit 100c on the downstream side of the second extraction unit 100b can function as a cleaning apparatus, similar to the second extraction unit 100b. Therefore, the contaminant contained in the liquid can be an intended substance in the extraction unit 100c. The liquid cleaned by the solvent 22b flows out from the second outlet hole 144 of the extraction unit 100c. Therefore, the second recovered liquid containing the cleaned substance is recovered in the second recovering tank 60 connected to the second outlet hole 144. The first recovering tank 50 is connected to the first outlet hole 142 of the extraction unit 100b. The first recovering tank 50 collects the liquid (the first recovered liquid 52) containing the solvent 22b and the contaminant.

It is preferable that the apparatus of the sixth embodiment has at least two solvent tanks 20. It is preferable that each solvent tank 20 stores a different solvent 22. As shown in Fig. 9, in the extraction and cleaning apparatus of the sixth embodiment, at least two solvent tanks 20a and 20b store different solvents 22 (a first solvent 22a and a second solvent 22b). For example, if there are two solvent tanks 20, the solvent 22 for extraction of the intended substance can be stored in one of the solvent tanks 20. The solvent 22 for cleaning can be stored in the other solvent tank 20. In the example shown in Fig. 9, the solvent 22a for extraction of the intended substance can be stored in the solvent tank 20a connected to the extraction unit 100a. The solvent 22b for cleaning can be stored in the solvent tank 20b connected to the extraction units 100b and 100c. As a result, the extraction unit 100a can function as an extraction apparatus, and the extraction units 100b and 100c can function as a cleaning apparatus.

When the different solvents 22 are two kinds of solvents, it is preferable that one is a hydrophobic solvent and the other is a hydrophilic solvent. When the liquid raw material 12 is hydrophobic, the solvent 22a stored in the first solvent tank 20a connected to the extraction unit 100a on the most upstream is preferably hydrophilic. When the liquid raw material 12 is hydrophilic, the solvent 22a stored in the first solvent tank 20a connected to the extraction unit 100a on the most upstream is preferably hydrophobic. When the liquid raw material 12 and the predetermined solvent 22a have predetermined hydrophilicity or hydrophobicity, extraction and cleaning of the intended substance from the liquid raw material 12 can be efficiently performed. In addition, it is preferable that the solvent 22a stored in the first solvent tank 20a connected to the extraction unit 100a on the most upstream and the solvent 22b stored in the second solvent tank 20b connected to the extraction units 100b and 100c other than the extraction unit 100a on the most upstream are different kinds of solvents (a hydrophilic or a hydrophobic solvent). Since both are different kinds of solvents, extraction and cleaning by the apparatus of the sixth embodiment can be facilitated.

In the apparatus of the sixth embodiment, the solvent tank 20 is connected to the mixer 110 of the extraction unit through the small diameter portion 40. Similar to the apparatus of the second embodiment, in the apparatus of the sixth embodiment, the small diameter portions 40 connected to the second inlet holes 114 can be small diameter portions 40 with different pressure losses between the small diameter portion 40a on the upstream side and the small diameter portion 40b on the downstream side (or the small diameter portion 40b on the upstream side and the small diameter portion 40c on the downstream side). Also, similar to the apparatus of the second embodiment, in the apparatus of the sixth embodiment, the channel connected to the first recovering tank 50 and the second recovering tank 60 can be provided with the second small diameter portions 70a, 70b, 70c, 70d.

As described above, in the case of the extraction and cleaning apparatus of the sixth embodiment shown in Fig. 9, the extraction unit 100a functions as the extraction apparatus and the extraction units 100b and 100c function as the cleaning apparatus. It is also possible that the extraction unit 100a on the most upstream functions as the cleaning apparatus. In this case, the extraction unit 100b and/or 100c functions as the extraction apparatus.

In Fig. 9, one extraction unit 100a having a function as an extraction apparatus and two extraction units 100b and 100c having a function as a cleaning apparatus are shown, but this is not limited. The extraction and cleaning apparatus of the sixth embodiment may have at least one extraction unit 100 having a function as an extraction apparatus and at least one extraction unit 100 having a function as a cleaning apparatus. The number N₁ of the extraction unit 100 having a function as an extraction apparatus is preferably 1 to 5 and more preferably 1 to 3. The number N₂ of the extraction unit 100 having a function as a cleaning apparatus is preferably 1 to 5 and more preferably 1 to 3. When the total number N₁ + N₂ is large, the number of pumps required can be reduced by transferring the solvent 22 (and the liquid raw material 12) using the pressurized gas feeding means 30.

### < Other embodiments>

(1) In the embodiments described above, the number of the raw material tank 10 and the solvent tank 20 is one, but the number of the raw material tank 10 and the solvent tank 20 is not limited thereto.
(2) In the embodiments described above, the material of a pipe is resin, but the material of the pipe is not limited thereto. The pipe may be formed of metal, for example.
(3) In the embodiments described above, the small diameter portion 40 is an example of a resin tube, but the small diameter portion 40 is not limited thereto. The small diameter portion 40 may be formed of a metal tube, for example. Also, a known needle valve, a back pressure tube, or a back pressure regulator used to adjust the back pressure of HPLC or an ion chromatography may be used as the small diameter portion 40.
(4) In the embodiments described above, the gas for transferring the liquid raw material 12 is nitrogen, but the type of gas is not limited thereto. The gas for transferring the liquid raw material 12 may be air or argon gas, for example.

### EXAMPLE

The embodiments of the present invention will be described below with reference to Examples.

### (Example 1)

In Example 1, the apparatus shown in the first embodiment (see Fig. 1) was applied to the cleaning of propionic acid. Specifically, the cleaning of Example 1 was performed by extracting metal ions (contaminants that are extraction target substances) contained in the propionic acid, which is a liquid raw material 12, into a solvent 22, which is ultrapure water. The metal ions can be easily extracted by the ultrapure water.

In Example 1, an apparatus similar to the apparatus shown in Fig. 1 was used. A pipe with an outer diameter of 1/8 inch and an inner diameter of 1.58 mm was used as the pipe to connect each part.

The propionic acid of 30 g was mixed with toluene (Kanto Chemical, Primepure Standard) of 170 g to obtain a liquid raw material 12 of 200 g. The obtained liquid raw material 12 was stored in a raw material tank 10.

The ultrapure water was stored in a polypropylene solvent tank 20 as a solvent 22 for cleaning. A PEEK tube with an inner diameter of 0.25 mm and a length of 150 mm was arranged as a small diameter portion 40 in the middle of the pipe connecting the solvent tank 20 and the mixer 110 of the extraction unit 100. An inner diameter of a pipe on the upstream side (a first solvent pipe 42) and a pipe on the downstream side (a second solvent pipe 44) connected to the small diameter portion 40 was 1.58 mm.

The liquid raw material 12 in the raw material tank 10 was transported to the mixer 110 by a plunger pump (a pump 14). At this time, the flow rate of the liquid raw material 12 was set at 2.0 ml/min.

The solvent 22 for cleaning stored in solvent tank 20 was transported to the mixer 110 by nitrogen pressure (a pressurized gas feeding means 30). At this time, the pressure in the solvent tank 20 was adjusted to 50 kPa.

A mixer-settler (manufactured by Mac Engineering, Model No. MS-L-IT-02-00-00) was used as a mixer 110 and a liquid separating portion 140 of the extraction unit 100 in Example 1. The liquid raw material 12 and the solvent 22 for cleaning were mixed using the mixer 110 with a Y-shaped microchannel of 0.8 mm width built in the mixer-settler.

The mixer 110 and the settler (the liquid separating portion 140) built in the mixer-settler described above were connected to a PTFE pipe as extraction portion 130, having an outer diameter of 1/16 inch, an inner diameter of 1 mm and a length of 5 m. By flowing the liquid raw material 12 and the solvent 22 mixed by the mixer 110 into this pipe (the extraction portion 130), the liquid raw material 12 and the solvent 22 became a slug flow in this pipe (the extraction portion 130), and the metal component (the extraction target substance) in the liquid raw material 12 was extracted into the ultrapure water (the solvent 22 for cleaning).

The mixed liquid of the liquid raw material 12 and the solvent 22 transported from the extraction unit 100 to the settler (a liquid separating portion 140) was separated into a solvent 22 (a first recovered liquid 52) containing the metal component and other liquid (a second recovered liquid 62) in the settler. The first recovered liquid 52 and the second recovered liquid 62 were transported to the first recovering tank 50 and the second recovering tank 60, respectively.

Table 1 shows the measurement results (weight ratio) of the metal components in the toluene solution of the propionic acid before cleaning and in the toluene solution of the propionic acid after cleaning recovered in the second recovering tank 60. The measurement was performed by ICP-MS (Inductively Coupled Plasma Mass Spectrometry). It is clear from Table 1 that the metal components in the propionic acid could be effectively cleaned by extracting them into the ultrapure water as the solvent 22 and removing them according to Example 1.

In Example 1, the solvent 22 stored in the solvent tank 20 was transported to the mixer 110 by the pressurized gas feeding means 30. Therefore, the apparatus of Example 1 is the apparatus that the intended substance contained in the liquid raw material can be extracted more easily.

**[Table 1]**

| | Na (ppb) | Mg (ppb) | Ca (ppb) | Ti (ppb) |
|---|---|---|---|---|
| Before cleaning | 75.2 | 36.7 | 517.7 | 15.5 |
| After cleaning | 17.5 | 1.9 | 125.9 | 1.8 |

### (Example 2)

In Example 2, a phenol resin was cleaned by removing water-soluble monomers (contaminants that are extraction target substances) in the phenol resin using the apparatus shown in second embodiment (see Fig. 3). In Example 2, three of extraction units 100a, 100b, 100c were connected in series as shown in Fig. 3, and three of the extraction units 100a, 100b, 100c were used for cleaning three times consecutively.

In Example 2, an apparatus similar to the apparatus shown in Fig. 3 was used, but the apparatus without the second small diameter portions 70a, 70b, 70c 70d and the valve 150 was used. A pipe with an outer diameter of 1/8 inch and an inner diameter of 1.58 mm was used to connect each part.

The phenol resin of 2.0 g was dissolved in ethyl acetate of 198 g to obtain 200 g of a liquid raw material 12. The obtained liquid raw material 12 was stored in a raw material tank 10.

Ion-exchanged water was stored in a solvent tank 20 as a solvent 22 for cleaning. Three flow channels were connected to the solvent tank 20, and were connected to mixers 110 of extraction units 100a, 100b, 100c, respectively. A PEEK tube with an inner diameter of 0.25 mm and a length of 150 mm, as small diameter portions 40a, 40b, 40c, was arranged in the middle of the pipe connecting the solvent tank 20 and the mixer 110. Inner diameter of pipes (first solvent pipes 42 and second solvent pipes 44) connecting the small diameter portions 40a, 40b, 40c were 1.58 mm.

The liquid raw material 12 in the raw material tank 10 was transported to the mixer 110 by a plunger pump (a pump 14). At this time, the flow rate of the liquid raw material 12 was set at 2.0 ml/min.

The ion-exchanged water stored in the solvent tank 20 was transported to the mixers 110 in the extraction units 100a, 100b, 100c by nitrogen pressure (the pressurized gas feeding means 30). At this time, the pressure in the tank was adjusted to 50 kPa.

Mixer-settlers (manufactured by Mac Engineering, Model No. MS-L-IT-02-00-00) were used as the mixers 110 and the liquid separating portions 140 in the extraction units 100a, 100b, 100c in Example 2. The liquid raw material 12 and the solvent 22 for cleaning were mixed using the mixer 110 with a Y-shaped microchannel of 0.8 mm width built in the mixer-settler.

The mixer 110 and the settler (the liquid separating portion 140) built in the above-mentioned mixer-settler were connected to a PTFE pipe as the extraction portion 130 having an outer diameter of 1/8 inch, an inner diameter of 1.58 mm and a length of 3 m. By flowing the liquid raw material 12 and the solvent 22 mixed by the mixer 110 into this pipe (the extraction portion 130), it became a slug flow in this pipe, and the monomer of the extraction target substance in the liquid raw material 12 was extracted into the ion-exchanged water as the solvent 22 for cleaning.

The mixed liquid of the liquid raw material 12 and the solvent 22 transported from the extraction portion 130 to the settler (the liquid separating portion 140) was separated into a solvent 22 (a first recovered liquid 52) containing monomer and other liquid (a second recovered liquid 62) in the settler. The first recovered liquid 52 was transported to the first recovering tank 50.

The second recovered liquid 62 (the liquid from which the monomer was removed from the liquid raw material 12) discharged from the settler of the first extraction unit 100a was transported to the mixer 110 of the second extraction unit 100b. The second recovered liquid 62 was mixed with the solvent 22 transported from the solvent tank 20 for cleaning in the mixer 110.

The liquid mixed by the mixer 110 became a slug flow in the pipe of the extraction portion 130. The monomer in the liquid raw material 12 contained in the second recovered liquid 62 was extracted into the solvent 22 for cleaning, which was cleaned and transported to the settler (the liquid separating portion 140). The liquid was separated into a solvent 22 containing the monomer (the first recovered liquid 52) and other liquid (the second recovered liquid 62) in the settler. The first recovered liquid 52 was transported to the first recovering tank 50.

The second recovered liquid 62 (the liquid from which monomers were removed from the liquid raw material 12), which flowed out from the settler of the second extraction unit 100b, was similarly transported to the mixer 110 of the third extraction unit 100c, mixed with the solvent 22 for cleaning at the mixer 110, and cleaned by extracting the monomers into the solvent 22 at the extraction portion 130, and transported to the settler (liquid separating portion 140). This liquid was separated into a solvent 22 containing monomers (the first recovered liquid 52) and the other liquid (the second recovered liquid 62) in the settler. The first recovered liquid 52 and the second recovered liquid 62 were transported to the first recovering tank 50 and the second recovering tank 60, respectively.

Table 2 shows the GPC (Gel Permeation Chromatography) measurement results (peak area ratio of UV absorption at 254 nm) of the monomers in the phenolic resin before cleaning and after cleaning at each cleaning step. It is clear from Table 2 that the phenolic resin could be effectively cleaned by extracting the monomers in the phenolic resin, which were the extraction target substances, into the ultrapure water, which was the solvent 22, and removing them according to Example 2.

In Example 2, the solvent 22 stored in the solvent tank 20 was transported to the mixer 110 by pressurized gas feeding means 30. Therefore, the apparatus of Example 2 is the apparatus that the intended substance contained in the liquid raw material can be extracted more easily.

**[Table 2]**

| Before cleaning | After cleaning with first extraction unit 100a | After cleaning with second extraction unit 100b | After cleaning with third extraction unit 100c |
|---|---|---|---|
| 2.78% | 1.58% | 1.46% | 1.38% |

### (Example 3)

In Example 3, the apparatus shown in third embodiment was applied to the extraction of propionic acid (an intended substance). In Example 3, as shown in Fig. 3, extraction units 100a, 100b, 100c connected in series were used, and three consecutive extractions were performed by three of the extraction units 100a, 100b, 100c.

In Example 3, an apparatus similar to the apparatus shown in Fig. 3 was used, but the apparatus without the second small diameter portions 70a, 70b, 70c 70d and the valve 150 was used. A pipe with an outer diameter of 1/8 inch and an inner diameter of 1.58 mm was used as the pipe for connecting each part.

The propionic acid of 40 g was mixed with ion-exchanged water of 160 g to obtain 200 g of a liquid raw material 12. The obtained liquid raw material 12 was stored in a raw material tank 10.

Toluene was stored in a solvent tank 20 as a solvent 22 for extraction. Three flow channels were connected to the solvent tank 20, which were respectively connected to mixers 110 of extraction units 100a, 100b, 100c. A PEEK tube with an inner diameter of 0.25 mm and a length of 150 mm, as small diameter portions 40a, 40b, 40c, was arranged in the middle of the pipe connecting solvent tank 20 and mixer 110. Inner diameters of pipes (first solvent pipes 42 and second solvent pipes 44) connecting the small diameter portions 40a, 40b, 40c were 1.58 mm.

The liquid raw material 12 in the raw material tank 10 was transported to the mixer 110 by a plunger pump (a pump 14). At this time, the flow rate of the liquid raw material 12 was set at 2.0 ml/min.

The toluene stored in the solvent tank 20 was transported to the mixer 110 in the extraction units 100a, 100b, 100c by nitrogen pressure (the pressurized gas feeding means 30). At this time, the pressure in the tank was adjusted to 75 kPa.

Mixer-settlers (manufactured by Mac Engineering, Model No. MS-L-IT-02-00-00) was used as the mixers 110 and the liquid separating portions 140 in the extraction units 100a, 100b, 100c in Example 3. The liquid raw material 12 and the solvent 22 for extraction were mixed using the mixer 110 with a Y-shaped microchannel of 0.8 mm width built in the mixer-settler.

The mixer 110 and the settler (the liquid separating portion 140) built in the mixer-settler described above were connected to a PTFE pipe as an extraction portion 130 having an outer diameter of 1/16 inch, an inner diameter of 1 mm and a length of 5 m. By flowing the liquid raw material 12 and the solvent 22 mixed by the mixer 110 into this pipe (the extraction portion 130), it became a slug flow in this pipe, and the propionic acid in the liquid raw material 12 was extracted into the toluene, which was the solvent 22 for extraction.

The mixed liquid of the liquid raw material 12 and the solvent 22 transported from the extraction portion 130 to the settler (the liquid separating portion 140) was separated into a solvent 22 containing the propionic acid (a first recovered liquid 52) and other liquid (a second recovered liquid 62) in the settler. The first recovered liquid 52 was transported to a second recovering tank 60. The second recovered liquid 62 (the liquid of the liquid raw material 12 from which propionic acid was recovered) contains the propionic acid that was not fully recovered.

The second recovered liquid 62 (the liquid of the liquid raw material 12 from which propionic acid was recovered) that flowed out from the settler of the first extraction unit 100a was transported to the mixer 110 of the second extraction unit 100b, and the second recovered liquid 62 was mixed in the mixer 110 with the solvent 22 for extraction, which was transported from the extraction solvent tank 20.

The liquid mixed by the mixer 110 became a slug flow in the pipe of the extraction portion 130, and the propionic acid in the liquid raw material 12 contained in the second recovered liquid 62 was extracted into the solvent 22 for extraction and transported to the settler (the liquid separating portion 140). This liquid was separated into a solvent 22 containing monomer (a first recovered liquid 52) and the other liquid (a second recovered liquid 62) in the settler. The first recovered liquid 52 was transported to the first recovering tank 50.

The liquid raw material 12 discharged from the settler of the second extraction unit 100b was similarly transported to the mixer 110 of the third extraction unit 100c and mixed with the solvent 22 for extraction in the mixer 110. The propionic acid was extracted in the extraction portion 130 and transported to the settler (the liquid separating portion 140). The liquid was separated into a solvent 22 containing propionic acid (a first recovered liquid 52) and the other liquid (a second recovered liquid 62) in the settler. The first recovered liquid 52 and the second recovered liquid 62 were transported to a first recovering tank 50 and a second recovering tank 60, respectively.

The recovery rate of the propionic acid extracted in the toluene was calculated from the concentration measurement results of GC (Gas Chromatograph). Table 3 shows the recovery ratio of the propionic acid in Example 3. It is clear from Table 3 that, the propionic acid, the intended substance, was effectively extracted by extracting the propionic acid in the ion-exchanged water into the toluene as the solvent 22 according to Example 3.

In Example 3, the solvent 22 stored in solvent tank 20 was transported to the mixer 110 by the pressurized gas feeding means 30. Therefore, the apparatus of Example 3 is the apparatus that the intended substance contained in the liquid raw material can be extracted more easily.

**[Table 3]**

| | After extraction in first extraction unit 100a | After extraction in second extraction unit 100b | After extraction in third extraction unit 100c | Total |
|---|---|---|---|---|
| Recovery rate | 28% | 36% | 20% | 84% |

### (Experimental Examples 1 and 2)

In Experimental Examples 1 and 2, a liquid raw material 12 and a solvent 22 were taken out from a raw material tank 10 and a solvent tank 20 by a plunger pump 14 in the apparatus shown in Fig. 3 in Experimental Example 1. In Experimental Example 2, a liquid raw material 12 was taken out from a raw material tank 10 by a plunger pump 14, and a solvent 22 was taken out from a solvent tank 20 by a pressurized gas feeding means 30.

### (Experimental Example 1)

In Experimental Example 1, one plunger pump (a pump 14) was used to transfer a liquid raw material 12 from a raw material tank 10 to a first extraction unit 100a in an apparatus shown in Fig. 3. In addition, three plunger pumps 14 were used to transfer a solvent 22 from a solvent tank 20 to three extraction units 100a, 100b, 100c. Water was stored in the raw material tank 10 as the liquid raw material 12. Toluene was stored in the solvent tank 20 as the solvent 22. The flow rate of the liquid raw material 12 to the extraction unit 100a was set at 5.0 ml/min, and the flow rate of the solvent 22 to the extraction units 100a, 100b, 100c was set at 3.5 ml/min.

In the apparatus shown in Fig. 3, small diameter portions 40a, 40b, 40c are arranged between the solvent tank 20 and the extraction unit 100. However, in Experimental Example 1, since the plunger pump 14 is used to transfer the solvent 22 from the solvent tank 20, it is not necessary to control the flow rate of the solvent 22 by the small diameter portions 40a, 40b, 40c. Therefore, in Experimental Example 1, the small diameter portions 40a, 40b, 40c were not arranged.

In Experimental Example 1, in order to stabilize the flow rate of the solvent 22 flowing from the first outlet hole 142 to the first recovering tank 50, second small diameter portions 70a, 70b, and 70c were arranged between the first outlet holes 142 and the first recovering tanks 50. In addition, a second small diameter portion 70d was arranged between the second outlet hole 144 and the second recovering tank 60. In Experimental Example 1, the second small diameter portions 70a, 70b, 70c 70d were made of PEEK tubes. Starting from the upstream side, the dimensions of the second small diameter portion 70a were an inner diameter of 0.125 mm and a length of 50 mm, the dimensions of the second small diameter portion 70b were an inner diameter of 0.25 mm and a length of 375 mm, and the dimensions of the second small diameter portion 70c were an inner diameter of 0.25 mm and a length of 100 mm. A PEEK tube having an inner diameter of 0.5 mm and a length of 100 mm was installed in front of the second recovering tank 60 as the second small diameter portion 70d. The pipes on the upstream side and downstream side of the second small diameter portions 70a, 70b, 70c 70d had an inner diameter of 1.58 mm.

Similar to Example 1 described above, a mixer-settlers (manufactured by Mac Engineering, Model No. MS-L-IT-02-00-00) was used as the mixers 110 of the extraction units 100 and the liquid separating portions 140 in Experimental Example 1. The liquid raw material 12 and the solvent 22 for cleaning were mixed using the mixer 110 with a Y-shaped microchannel of 0.8 mm width built in the mixer-settler. The extraction portion 130 of the extraction unit 100 and the settler (the liquid separating portion 140) were the same as in Example 1.

When the apparatus of Experimental Example 1 was operated, the liquid levels in the settlers of the three extraction units 100a, 100b, 100c were stable. Therefore, it is clear that the apparatus of Experimental Example 1 can be used for cleaning or extraction three times continuously.

### (Experimental Example 2)

Experimental Example 2 is similar to Experimental Example 1 except that, a pressurized gas feeding means 30 to transfer a solvent 22 from a solvent tank 20 to three extraction units 100a, 100b, 100c was used, small diameter portions 40a, 40b, 40c were arranged, and second small diameter portions 70a, 70b, 70c, 70d were changed in size. An apparatus similar to the apparatus shown in Fig. 3 was used to measure the flow rate of a solvent 22.

Similar to Experimental Example 1, water was stored in a raw material tank 10 as a liquid raw material 12, and toluene was stored in a solvent tank 20 as a solvent 22. Similar to Experimental Example 1, the flow rate of the liquid raw material 12 to the extraction unit 100a was set at 5.0 ml/min.

In Experimental Example 2, the toluene (a solvent 22) stored in the solvent tank 20 was transported to the mixer 110 by nitrogen pressure. At this time, the pressure in the tank was adjusted to 422 kPa by a pressure regulating portion 34 of the pressurized gas feeding means 30.

In Experimental Example 2, small diameter portions 40a, 40b, 40c were arranged between the solvent tank 20 and the extraction unit 100. In Experimental Example 2, the small diameter portions 40a, 40b, 40c were made of PEEK tubes. Starting from the upstream side, the dimensions of the small diameter portion 40a was an inner diameter of 0.5 mm and a length of 100 mm, the dimensions of the small diameter portion 40b were an inner diameter of 0.25 mm and a length of 150 mm, and the dimensions of the small diameter portion 40c were an inner diameter of 0.25 mm and a length of 300 mm. Inner diameters of pipes (first solvent pipes 42 and second solvent pipes 44) on the upstream side and downstream side of the small diameter portions 40a, 40b, 40c were 1.58 mm.

Valves (not shown in the figures) for fine adjustment of the flow rate were installed between the small diameter portions 40 and the extraction units 100.

In Experimental Example 2, similar to Experimental Example 1, second small diameter portions 70a, 70b, and 70c were arranged between the first outlet holes 142 and the first recovering tanks 50 to stabilize the flow rate of the solvent 22 flowing from the first outlet holes 142 to the first recovering tanks 50. A second small diameter portion 70d was arranged between the second outlet hole 144 and the second recovering tank 60. The materials and dimensions of the second small diameter portions 70a, 70b, 70c 70d were the same as in Experimental Example 1. In Experimental Example 2, the second small diameter portions 70a, 70b, 70c 70d were made of PEEK tubes. Starting from the upstream side, the dimensions of the second small diameter portion 70a were an inner diameter of 0.125 mm and a length of 50 mm, the dimensions of the second small diameter portion 70b were an inner diameter of 0.25 mm and a length of 375 mm, and the dimensions of the second small diameter portion 70c were an inner diameter of 0.25 mm and a length of 100 mm. Similar to Experimental Example 1, a PEEK tube with an inner diameter of 0.5 mm and a length of 100 mm was installed in front of the second recovering tank 60 as the second small diameter portion 70d. Similar to Experimental Example 1, Inner diameters of pipes on the upstream side and downstream side of the second small diameter portions 70a, 70b, 70c 70d were 1.58 mm.

Similar to Example 1 and Experimental Example 1, a mixer-settlers (manufactured by Mac Engineering, Model No. MS-L-IT-02-00-00) was used as the mixers 110 and the liquid separating portions 140 of extraction units 100 in Experimental Example 2. The liquid raw material 12 and the solvent 22 for cleaning were mixed using the mixer 110 with a Y-shaped microchannel of 0.8 mm width built in the mixer-settler.

The mixer 110 and the settler built in the mixer-settler described above are connected by a PTFE pipe as an extraction portion 130, having an outer diameter of 1/16 inch, an inner diameter of 1 mm, and a length of 5 m. By flowing the liquid raw material 12 and the solvent 22 mixed by the mixer 110 into this pipe (the extraction portion 130), it became a slug flow in this pipe. The mixed liquid of the liquid raw material 12 and the solvent 22 transported from the extraction portion 130 to the settler (the liquid separating portion 140) was separated into a solvent 22 (a first recovered liquid 52) and the liquid raw material 12 (a second recovered liquid 62) in the settler. The first recovered liquid 52 was transported to first recovering tank 50.

As shown in Fig. 3, in the apparatus of Experimental Example 2, the three extraction units 100a, 100b, 100c are arranged in series. When the apparatus of Experimental Example 2 was operated under the above conditions, the flow rate of the solvent 22 flowing into the first extraction unit 100a on the most upstream side was 3.6 ml/min. At this time, the pressure of the extraction portion 130 was 402 kPa, and the difference between the pressure of the extraction portion 130 and the pressure of the solvent tank 20 (the pressure in the solvent tank 20 - the pressure in the extraction portion 130) was 19 kPa. As a result, the first recovered liquid 52 was recovered in the first recovering tank 50 connected to the extraction unit 100a at a flow rate of 3.6 ml/min.

The flow rate of solvent 22 flowing into the second extraction unit 100b downstream of the first extraction unit 100a was 3.5 ml/min. At this time, the pressure of the extraction portion 130 was 156 kPa, and the difference between the pressure of the extraction portion 130 and the pressure of the solvent tank 20 (the pressure in the solvent tank 20 - the pressure in the extraction portion 130) was 265 kPa. As a result, the first recovered liquid 52 was recovered in the first recovering tank 50 connected to extraction unit 100b at a flow rate of 3.6 ml/min.

The flow rate of solvent 22 flowing into the third extraction unit 100c downstream of the second extraction unit 100b was 3.4 ml/min. At this time, the pressure of the extraction portion 130 was 63 kPa, and the difference between the pressure of the extraction portion 130 and the pressure of the solvent tank 20 (the pressure in the solvent tank 20 - the pressure in the extraction portion 130) was 360 kPa. As a result, the first recovered liquid 52 was recovered in the first recovering tank 50 connected to the extraction unit 100c at a flow rate of 3.6 ml/min. In addition, the second recovered liquid 62 was recovered into the second recovering tank 60 connected to the extraction unit 100c at a flow rate of 5 ml/min.

As described above, in Experimental Example 2, by pressurizing the solvent tank 20 to an appropriate pressure using the pressurized gas feeding means 30 and appropriately selecting the dimensions (the inner diameters and the lengths) of the small diameter portions 40a, 40b, 40c, it became clear that an appropriate fluid flow could be generated in the apparatus even when the three extraction units 100a, 100b, 100c were arranged in series, similar to Experimental Example 1. Therefore, it is clear that the apparatus of Experimental Example 2 can be used for three consecutive cleanings or extractions, similar to Experimental Example 1. Moreover, in Experimental Example 2, the number of high-cost plunger pumps for use can be reduced compared to Experimental Example 1. Therefore, it became clear that the apparatus of the present embodiment can more easily extract the extraction target substance contained in the liquid raw material.

### (Example 4)

As described above, it is clear that an extraction target substance dissolved in a liquid raw material can be extracted using the apparatus of Experimental Example 2 described above. Therefore, the apparatus of Experimental Example 2 can be used as an extraction apparatus of the present embodiment. In Example 4, in order to verify this, an extraction target substance (an intended substance) was extracted from a liquid raw material using the same apparatus that was used in Experimental Example 2.

In Example 4, propionic acid was extracted and recovered from 20% propionic acid aqueous solution (a liquid raw material) using a toluene as a solvent, which is similar to Example 3, using a same apparatus used in Experimental Example 2 (an apparatus similar to the apparatus shown in Fig. 3). The propionic acid aqueous solution was transported at a flow rate of 5 ml/min by a plunger pump, and the toluene was transported to three extraction units by pressure feeding. As described below, the recovery rate of the propionic acid in Example 4 was 88%. The following is a specific description of Example 4.

In Example 4, similar to Experimental Example 2, the apparatus similar to the apparatus shown in Fig. 3 was used. That is, a pressurized gas feeding means 30 was used to transport a solvent 22 from a solvent tank 20 to three extraction units 100a, 100b, 100c. Small diameter portions 40a, 40b, 40c and second small diameter portions 70a, 70b, 70c 70d were arranged.

Similar to Example 3, propionic acid of 40 g was mixed with ion-exchanged water of 160 g to obtain 200 g of a liquid raw material 12. The obtained liquid raw material 12 was stored in a raw material tank 10. A toluene was stored as a solvent 22 in a solvent tank 20. Similar to Experimental Example 2, a flow rate of the liquid raw material 12 into the extraction unit 100a was set at 5.0 ml/min.

The toluene (the solvent 22) stored in the solvent tank 20 was transported to a mixer 110 by pressure of a pressurized gas (nitrogen). At this time, the pressure in the tank was adjusted to 405 kPa by a pressure regulating portion 34 of a pressurized gas feeding means 30.

The small diameter portions 40a, 40b, 40c were arranged between the solvent tank 20 and the extraction unit 100. The small diameter portions 40a, 40b, 40c were made of PEEK tubes, and, starting from the upstream side, the dimensions of the small diameter portion 40a were an inner diameter of 0.5 mm and a length of 100 mm, the dimensions of the small diameter portion 40b were an inner diameter of 0.25 mm and a length of 150 mm, and the dimensions of the small diameter portion 40c were an inner diameter of 0.25 mm and length of 300 mm. Inner diameters of pipes (a first solvent pipe 42 and a second solvent pipe 44) on the upstream and downstream sides of the small diameter portions 40a, 40b, 40c were 1.58 mm.

A valve (not shown in the figures) for fine adjustment of the flow rate was installed between the small diameter portion 40 and the extraction unit 100.

Similar to Experimental Example 2, in order to stabilize the flow rate of the solvent 22 flowing from a first outlet hole 142 to a first recovering tank 50, the second small diameter portions 70a, 70b, and 70c were arranged between the first outlet hole 142 and the first recovering tank 50. The second small diameter portion 70d was arranged between a second outlet hole 144 and a second recovering tank 60. The materials and the dimensions of the second small diameter portions 70a, 70b, 70c 70d were the same as in Experimental Example 2. That is, in Example 4, the second small diameter portions 70a, 70b, 70c 70d were made of PEEK tubes, and, starting from the upstream side, the dimensions of the second small diameter portion 70a were an inner diameter of 0.125 mm and a length of 50 mm, the dimensions of the second small diameter portion 70b were an inner diameter of 0.25 mm and a length of 375 mm, and the dimensions of the second small diameter portion 70c were an inner diameter of 0.25 mm and a length of 100 mm. Similar to Experimental Examples 1 and 2, a PEEK tube with an inner diameter of 0.5 mm and a length of 100 mm was installed in front of the second recovering tank 60 as the second small diameter portion 70d. Similar to Experimental Example 2, inner diameters of pipes on the upstream and downstream sides of the second small diameter portions 70a, 70b, 70c 70d were 1.58 mm.

Similar to Example 3 and Experimental Example 2 described above, a mixer-settlers (manufactured by Mac Engineering, Model No. MS-L-IT-02-00-00) was used as the mixers 110 and the liquid separating portions 140 in the extraction units 100 of Example 4. The liquid raw material 12 and the solvent 22 for cleaning were mixed using the mixer 110 with a Y-shaped microchannel of 0.8 mm width built in the mixer-settler.

The mixer 110 and the settler built in the mixer-settler are connected as an extraction portion 130 by a PTFE pipe with an outer diameter of 1/16 inch, an inner diameter of 1 mm, and a length of 5 m. By flowing the liquid raw material 12 and the solvent 22 mixed by the mixer 110 into this pipe (the extraction portion 130), it became a slug flow in this pipe, and the propionic acid is extracted from the water into the toluene. The mixed liquid of the liquid raw material 12 and the solvent 22 transported from the extraction portion 130 to the settler (the liquid separating portion 140) was separated into a solvent 22 (a first recovered liquid 52) and a liquid raw material 12 (a second recovered liquid 62) in the settler. The first recovered liquid 52 was transported to the first recovering tank 50.

As shown in Fig. 3, in the apparatus of Example 4, the three extraction units 100a, 100b, 100c are arranged in series. When the apparatus of Example 4 was operated under the above conditions, the flow rate of solvent 22 flowing into the first extraction unit 100a on the most upstream side was 3.8 ml/min. At this time, the pressure of the extraction portion 130 was 369 kPa, and the difference between the pressure of the extraction portion 130 and the pressure of the solvent tank 20 (the pressure in the solvent tank 20 - the pressure in the extraction portion 130) was 36 kPa. A recovery rate of the propionic acid extracted in the toluene was calculated from the concentration measurement results of GC (Gas Chromatograph). As a result, the recovery rate of the propionic acid in the first recovered liquid 52 was 38%. Therefore, the first recovered liquid 52 was recovered in the first recovering tank 50 connected to the extraction unit 100a at a flow rate of 3.8 ml/min, and the recovery rate of the propionic acid was 38%.

The flow rate of solvent 22 flowing into the second extraction unit 100b on the downstream of the first extraction unit 100a was 3.6 ml/min. At this time, the pressure of the extraction portion 130 was 132 kPa, and the difference between the pressure of extraction portion 130 and the pressure of the solvent tank 20 (the pressure in solvent tank 20 - the pressure in extraction portion 130) was 273 kPa. A recovery rate of the propionic acid extracted in the toluene was calculated from the GC concentration measurement results. The recovery rate of propionic acid in the second recovered liquid 52 was 29%. Therefore, the first recovered liquid 52 was recovered into the first recovering tank 50 connected to the extraction unit 100b at a flow rate of 3.6 ml/min, and the recovery rate of the propionic acid was 29%.

The flow rate of solvent 22 flowing into the third extraction unit 100c on the downstream of the second extraction unit 100b was 3.8 ml/min. The pressure of the extraction portion 130 was 88 kPa, and the difference between the pressure of the extraction portion 130 and the pressure of the solvent tank 20 (the pressure in solvent tank 20 - the pressure in extraction portion 130) was 317 kPa. A recovery rate of the propionic acid extracted into the toluene was calculated from the GC concentration measurement results. As a result of the calculation, the recovery rate of the propionic acid in the first recovered liquid 52 was 21%. Therefore, the first recovered liquid 52 was recovered in the first recovering tank 50 connected to extraction unit 100c at a flow rate of 3.8 ml/min, and the recovery rate of the propionic acid was 21%. The recovery rate of the propionic acid was 88% using the three extraction units 100a, 100b and 100c.

Table 4 shows the recovery rates of the propionic acid extracted in the toluene in Example 4. The recovery rate of the propionic acid was calculated from the concentration measurement of GC (Gas Chromatograph). It is clear from Table 4 that, according to Example 4, the propionic acid, the intended substance, was effectively extracted by extracting the propionic acid the in ion-exchanged water into the toluene, solvent 22.

In Example 4, the solvent 22 stored in the solvent tank 20 was transported to the mixer 110 by the pressurized gas feeding means 30. Therefore, the apparatus of Example 4 is the apparatus that the intended substance contained in the liquid raw material can be extracted more easily.

**[Table 4]**

| | After extraction in first extraction unit 100a | After extraction in second extraction unit 100b | After extraction in third extraction unit 100c | Total |
|---|---|---|---|---|
| Recovery rate | 38% | 29% | 21% | 88% |

### (Example 5)

As described above, it is clear that a contaminant (an extraction target substance) dissolved in a liquid raw material can be extracted using the apparatus of Experimental Example 2 described above. Therefore, the apparatus of Experimental Example 2 can be used as a cleaning apparatus of the present embodiment. In Example 5, in order to verify this, a liquid raw material was cleaned by extracting a contaminant, which is an extraction target substance (an intended substance), from a liquid raw material using the same apparatus that was used in Example 4.

In Example 5, metal ions (a contaminant that is an extraction target substance) were removed, by extracting and recovering, from a liquid raw material 12 that is 2-MeTHF solution of phenolic resin, using ultrapure water as a solvent 22, using a same apparatus used in Example 4 (an apparatus similar to the apparatus shown in Fig. 3). That is, the metal ions were removed from the liquid raw material 12 continuously three times in total by the three extraction units 100a, 100b, 100c connected in series. The following is a specific description of Example 5.

In Example 5, similar to Example 4, an apparatus similar to the apparatus shown in Fig. 3 was used. That is, a pressurized gas feeding means 30 was used to transport a solvent 22 from a solvent tank 20 to the three extraction units 100a, 100b, 100c. Small diameter portions 40a, 40b, 40c and second small diameter portions 70a, 70b, 70c 70d were arranged.

The 2-MeTHF solution of a phenol resin (a concentration of 20 weight %) was stored as a liquid raw material 12 in a raw material tank 10. Ultrapure water was stored as a solvent 22 in solvent tank 20.

The liquid raw material 12 stored in the raw material tank 10 was transported to a mixer 110 by pressure of a pressurized gas (nitrogen). At this time, the pressure in the tank was adjusted to 200 kPa by a pressure regulating portion 34 of a pressurized gas feeding means 30.

Small diameter portion 40 was arranged between the raw material tank 10 and the extraction unit 100. The small diameter portion 40 was made of a PEEK tube, and the inner diameter was 0.25 mm and the length was 55 mm. Inner diameters of pipes (a first solvent pipe 42 and a second solvent pipe 44) on the upstream and downstream sides of the small diameter portion 40 were 1.58 mm.

The ultrapure water (the solvent 22) stored in the solvent tank 20 was transported to the mixer 110 by the nitrogen pressure. At this time, the pressure in the tank was adjusted to 200 kPa by a pressure regulating portion 34 of the pressurized gas feeding means 30.

The small diameter portions 40a, 40b, 40c were arranged between the solvent tank 20 and the extraction unit 100. In Example 5, the lengths of the small diameter portions 40a, 40b, 40c were different from those in Example 4. Specifically, small diameter portions 40a, 40b, 40c were made of PEEK tubes, and, starting from the upstream side, the dimensions of the small diameter portion 40a were an inner diameter of 0.5 mm and a length of 90 mm, the dimensions of the small diameter portion 40b were an inner diameter of 0.25 mm and a length of 110 mm, and the dimensions of the small diameter portion 40c were an inner diameter of 0.25 mm and a length of 200 mm. Inner diameters of pipes (a first solvent pipe 42 and a second solvent pipe 44) on the upstream and downstream sides of the small diameter portions 40a, 40b, 40c were 1.58 mm.

A valve (not shown in the figures) for fine adjustment of the flow rate was installed between the small diameter portion 40 and the extraction unit 100.

Similar to Example 4, in order to stabilize the flow rate of the solvent 22 flowing from a first outlet hole 142 to a first recovering tank 50, the second small diameter portions 70a, 70b, and 70c were arranged between the first outlet hole 142 and the first recovering tank 50. The second small diameter portion 70d was arranged between a second outlet hole 144 and a second recovering tank 60. In Example 5, the dimensions of second small diameter portions 70a and 70b were different from those in Example 4. Specifically, the materials of second the small diameter portions 70a, 70b, 70c 70d were PEEK tubes, and, starting from the upstream side, the dimensions of the second small diameter portion 70a were an inner diameter of 0.25 mm and a length of 215 mm, the dimensions of the second small diameter portion 70b were an inner diameter of 0.25 mm and a length of 160 mm, and the dimensions of the second small diameter portion 70c were an inner diameter of 0.25 mm and a length of 100 mm. Similar to Example 4, a PEEK tube with an inner diameter of 0.5 mm and a length of 100 mm was installed in front of the second recovering tank 60 as the second small diameter portion 70d. In addition, similar to Example 4, inner diameters of pipes on the upstream side and downstream sides of the second small diameter portions 70a, 70b, 70c 70d were 1.58 mm.

Similar to Example 4 described above, a mixer-settlers (manufactured by Mac Engineering, Model No. MS-L-IT-02-00-00) was used as the mixers 110 and the liquid separating portions 140 of the extraction units 100 of the Example. The liquid raw material 12 and the solvent 22 for cleaning were mixed using the mixer 110 with a Y-shaped microchannel of 0.8 mm width built in the mixer-settler.

The mixer 110 and the settler in the mixer-settler described above are connected by a PTFE pipe as an extraction portion 130, having an outer diameter of 1/16 inch, an inner diameter of 1 mm, and a length of 10 m. By flowing the liquid raw material 12 and the solvent 22 mixed by the mixer 110 into this pipe (the extraction portion 130), it became a slug flow in this pipe, and the metal components in the phenolic resin are extracted into the water. The mixed liquid of the liquid raw material 12 and the solvent 22 transported from the extraction portion 130 to the settler (the liquid separating portion 140) was separated into a solvent 22 (a first recovered liquid 52) and a liquid raw material 12 (a second recovered liquid 62) in the settler. The first recovered liquid 52 was transported to the first recovering tank 50.

As shown in Fig. 3, in the apparatus of Example 5, the three extraction units 100a, 100b, 100c are arranged in series. When the apparatus of Example 5 was operated under the above conditions, the flow rate of the solvent 22 flowing into the first extraction unit 100a on the most upstream side was 3.2 ml/min. At this time, the pressure of the extraction portion 130 was 188 kPa, and the difference between the pressure of the extraction portion 130 and the pressure of the solvent tank 20 (the pressure in the solvent tank 20 - the pressure in the extraction portion 130) was 12 kPa.

The flow rate of solvent 22 flowing into the second extraction unit 100b on the downstream of the first extraction unit 100a was 1.2 ml/min. At this time, the difference between the pressure of the extraction portion 130 and the pressure of the solvent tank 20 (the pressure in the solvent tank 20 - the pressure in the extraction portion 130) was 40 kPa.

The flow rate of solvent 22 flowing into the third extraction unit 100c on the downstream of the second extraction unit 100b was 2.2 ml/min, and the flow rate of the liquid raw material 12 was 3.2 ml/min. At this time, the pressure of the extraction portion 130 was 125 kPa, and the difference between the pressure of the extraction portion 130 and the pressure of the solvent tank 20 (the pressure in the solvent tank 20 - the pressure in the extraction portion 130) was 75 kPa.

Table 5 shows the measurement results (weight ratio) of the metal components in the 2-MeTHF solution of the phenolic resin before cleaning (the liquid raw material 12) and the 2-MeTHF solution of the phenolic resin after cleaning (the second recovered liquid) recovered in the second recovering tank 60. In Table 5, the measurement results (weight ratio) of the metal components in the 2-MeTHF solution of the phenolic resin from the second outlet hole 144 of the first extraction unit 100a are shown in the column of "After extraction unit 100a". The measurement results (weight ratio) of the metal components of the 2-MeTHF solution of the phenolic resin from the second outlet hole 144 of the second extraction unit 100b are shown in the column "After extraction unit 100b". The solutions for these measurements were removed from the second outlet holes 144 of extraction units 100a and 100b. The concentrations of the metal components in the solution were measured by ICP-MS (Inductively Coupled Plasma Mass Spectrometry). As it is clear from Table 5, according to Example 5, the phenol resin could be cleaned by effectively extracting the metal components in the phenol resin into the ultrapure water (the solvent 22) and removing them.

**[Table 5]**

| | Li (ppb) | Na (ppb) | Mg (ppb) | Al (ppb) | K (ppb) | Ca (ppb) | Fe (ppb) |
|---|---|---|---|---|---|---|---|
| Liquid raw material (before cleaning) | 4.7 | 310611 | 2079 | 1814 | 1255 | 1944 | 320 |
| After extraction unit 100a | 0.0 | 0.6 | 0.2 | 1.4 | 0.4 | 7.0 | 3.3 |
| After extraction unit 100b | 0.0 | 0.3 | 0.1 | 0.5 | 0.2 | 1.4 | 1.9 |
| After extraction unit 100c (Second recovered liquid) | 0.0 | 0.1 | 0.1 | 0.3 | 0.1 | 0.9 | 0.4 |

### (Example 6)

Example 6 is an extraction and cleaning apparatus of the sixth embodiment described above. In Example 6, a polyethylene glycol compound was extracted from an aqueous solution of a polyethylene glycol compound (a liquid raw material), and the extracted polyethylene glycol compound was cleaned and recovered, using a similar apparatus to the apparatus shown in Fig. 9.

As shown in Fig. 9, the apparatus used in Example 6 has two solvent tanks 20a and 20b. The solvent tank 20a stores a solvent 22a (dichloromethane) for extracting the polyethylene glycol compound. The solvent tank 20b stores a solvent 22b (salt solution) for cleaning the aqueous solution of the polyethylene glycol compound. The solvent tank 20a is connected to the first extraction unit 100a. In the first extraction unit 100a, the polyethylene glycol compound as an intended substance is extracted from the liquid raw material 12 by the dichloromethane (the solvent 22a). The solvent tank 20b is connected to the second and third extraction units 100b and 100c. In the second and the third extraction units 100b and 100c, the polyethylene glycol compound extracted by dichloromethane (the solvent 22a) is cleaned by extracting a contaminant. The following is a specific description of Example 6.

In Example 6, the apparatus shown in Fig. 9 was applied to extract the polyethylene glycol compound (a useful substance) from a reaction liquid of the polyethylene glycol compound and then extract water-soluble monomers (contaminants), and the polyethylene glycol compound was extracted and cleaned. In Example 6, three of extraction units 100a, 100b and 100c were connected in series as shown in Fig. 9. After one time extraction was performed by extraction unit 100a, successive two times cleanings were performed by the extraction units 100b and 100c.

The reaction liquid of the polyethylene glycol compound was stored in a raw material tank 10 as a liquid raw material 12, and dichloromethane for extraction of the polyethylene glycol compound was stored in a solvent tank 20a as a solvent 22a. Salt solution for extraction of water-soluble monomers was stored in a solvent tank 20b as a solvent 22b. The concentration of the salt solution in the solvent 22b is 10 weight %. The flow rate of the liquid raw material 12 into extraction unit 100a was set at 10.0 ml/min.

The dichloromethane (the solvent 22a) stored in the solvent tank 20a and the salt solution (the solvent 22b) stored in the solvent tank 20b were transported to mixer 110 by nitrogen pressure. At this time, the pressure in the solvent tanks 20a and 20b was adjusted to 450 kPa by a pressure regulating portion 34 of the pressurized gas feeding means 30.

A small diameter portion 40a was arranged between the solvent tank 20a and the extraction unit 100a. Small diameter portions 40b and 40c were arranged between the solvent tank 20b and the extraction unit 100b and 100c. The small diameter portions 40a, 40b, 40c were made of PEEK tubes, and, starting from the upstream side, the dimensions of the small diameter portion 40a were an inner diameter of 0.5 mm and a length of 50 mm, the dimensions of the small diameter portion 40b were an inner diameter of 0.25 mm and a length of 100 mm, and the dimensions of the small diameter portion 40c were an inner diameter of 0.25 mm and a length of 150 mm. Inner diameters of pipes (a first solvent pipe 42 and a second solvent pipe 44) on the upstream and downstream sides of the small diameter portions 40a, 40b, 40c were 1.58 mm.

A valve (not shown in the figures) for fine adjustment of the flow rate was installed between the small diameter portion 40 and the extraction unit 100.

In order to stabilize the flow rate of the liquid flowing out from a first outlet hole 144 of the extraction unit 100a to the second recovering tank 60, a second small diameter portion 70a was arranged between the second outlet hole 144 and a second recovering tank 60. Similarly, second small diameter portions 70b and 70c were arranged between first outlet holes 142 and first recovering tanks 50 of the extraction units 100b and 100c. A second small diameter portion 70d was arranged between a second outlet hole 144 and a second recovering tank 60 of the extraction unit 100c. The second small diameter portions 70a, 70b, 70c 70d were made of PEEK tubes. The dimensions of the second small diameter portion 70a were an inner diameter of 0.25 mm and a length of 150 mm, the dimensions of the second small diameter portion 70b were an inner diameter of 0.25 mm and a length of 75 mm, and the dimensions of the second small diameter portion 70c were an inner diameter of 0.5 mm and a length of 100 mm. A PEEK tube with an inner diameter of 0.5 mm and a length of 50 mm was arranged in front of the second recovering tank 60 as the second small diameter portion 70d. Inner diameters of pipes on the upstream side and downstream sides of the second small diameter portions 70a, 70b, 70c 70d were 1.58 mm.

Similar to Example 1 described above, a mixer-settlers (manufactured by Mac Engineering, Model No. MS-L-IT-02-00-00) was used as the mixers 110 and liquid separating portions 140 of extraction units 100 in Example 6. In the extraction unit 100a, the liquid raw material 12 and the solvent 22a for extraction were mixed using the mixer 110 with a Y-shaped microchannel of 0.8 mm width built in the mixer-settler. In extraction units 100b and 100c, a liquid for cleaning target and solvent 22b for cleaning were mixed using the mixer 110.

The mixer 110 and the settler in the mixer-settler described above are connected by a PTFE pipe as an extraction portion 130, having an outer diameter of 1/8 inch, an inner diameter of 1.58 mm, and a length of 3 m. By flowing the liquid raw material 12 and the solvent 22 mixed by the mixer 110 into this pipe (the extraction portion 130), it became a slug flow in this pipe, and the intended substance is extracted into the solvent. In the extraction unit 100a, the mixed liquid of the liquid raw material 12 and the solvent 22 transported from the extraction portion 130 to the settler (the liquid separating portion 140) was separated into a solvent 22a from which the intended substance was extracted in the settler, and another liquid (a second recovered liquid 62) derived from the liquid raw material 12. The second recovered liquid 62 was transported to the second recovering tank 60. In addition, in the extraction units 100b and 100c, the settler (the liquid separating portion 140) separated a solvent 22b (a first recovered liquid 62) from which the contaminant was extracted, and another liquid (a liquid containing the polyethylene glycol compound). The liquid containing the polyethylene glycol compound was discharged from second outlet holes 144 of the extraction units 100b and 100c, and finally recovered by a second recovering tank 60 connected to the second outlet hole 144 of the extraction unit 100c.

As shown in Fig. 9, in the apparatus of Example 6, the three extraction units 100a, 100b, 100c are arranged in series. When the apparatus of Example 6 was operated under the conditions described above, the flow rate of the dichloromethane as the solvent 22a flowing into the first extraction unit 100a on the most upstream side was 9.8 ml/min. At this time, the pressure of the extraction portion 130 of the extraction unit 100a was 425 kPa, and the difference between the pressure of the extraction portion 130 and the pressure of the solvent tank 20 (the pressure in the solvent tank 20 - the pressure in the extraction portion 130) was 25 kPa.

In addition, the flow rate of the salt solution of the solvent 22 flowing into the second extraction unit 100b on the downstream of the first extraction unit 100a was 9.6 ml/min. At this time, the pressure of the extraction portion 130 of the extraction unit 100b was 288 kPa, and the difference between the pressure of the extraction portion 130 and the pressure of the solvent tank 20 (the pressure in the solvent tank 20 - the pressure in the extraction portion 130) was 162 kPa.

In addition, the flow rate of the salt solution of the solvent 22 flowing into the third extraction unit 100c on the downstream of the second extraction unit 100b was 9.5 ml/min. At this time, the pressure of the extraction portion 130 was 176 kPa, and the difference between the pressure of the extraction portion 130 and the pressure of the solvent tank 20 (the pressure in the solvent tank 20 - the pressure in the extraction portion 130) was 274 kPa.

Table 6 shows the purity (weight %) converted from the integral ratio of 1H-NMR (proton nuclear magnetic resonance analysis) of the liquid raw material 12 before extraction and cleaning, and the polyethylene glycol compound and the water-soluble monomers (contaminants 1 and 2) recovered in in the second recovering tank 60 after extraction and cleaning. It is clear from Table 6 that, according to Example 6, the polyethylene glycol compound could be extracted from the liquid raw material 12 with the dichloromethane as the solvent 22a. According to Example 6, the polyethylene glycol compound could be effectively cleaned by extracting the water-soluble monomers (the contaminants 1 and 2) from the polyethylene glycol compound into the salt solution as the solvent 22b.

**[Table 6]**

| | Water soluble monomer (Contaminant 1) | Water soluble monomer (Contaminant 2) | Polyethylene glycol compound |
|---|---|---|---|
| Liquid raw material | 42.60% | 0.30% | 57.10% |
| After extraction unit 100a | 8.09% | 0.23% | 91.68% |
| After extraction unit 100b | 5.57% | 0.04% | 94.39% |
| After extraction unit 100c (second recovered liquid) | 1.23% | 0.04% | 98.73% |

### Description of Reference Numerals

10: Raw material tank
12: Liquid raw material
14: Pump (Liquid raw material feeding means)
20: Solvent tank
20a: First solvent pipe
20b: Second solvent tank
22: Solvent
22a: First solvent
22b: Second solvent
30: Pressurized gas feeding means
32: High pressure gas feeding portion (nitrogen tank)
34: Pressure regulating portion(pressure regulating valve)
36: Nitrogen feeding pipe
40, 40a, 40b, 40c: Small diameter portion
41a, 41b: Connectors
42: First solvent pipe
44: Second solvent pipe
46: temperature controller
50: First recovering tank
52: First recovering liquid
60: Second recovering tank
62: Second recovered liquid
70a, 70b, 70c, 70d: Second small diameter portion
100, 100a, 100b, 100c: Extraction unit
110: Mixer
112: First inlet hole
114: Second inlet hole
130: Extraction portion
140: Liquid separating portion
142: First outlet hole
144: Second outlet hole
150: Valve
210: Reaction apparatus
212a, 212b: Raw material tank for the reaction apparatus
214: Mixer for the reaction apparatus
216: Reactant tank
218a, 218b, 220: Pipe
222a, 222b: Nitrogen feeding pipe for the reaction apparatus
224a, 224b: Pressure regulating valve for the reaction apparatus
228a, 228b: Small diameter portion for the reaction apparatus
402a, 402b: Metal plates
404: Microchannel
412: Tubes
414: Deformed portions of tubes

## Claims

1. An apparatus for extracting an extraction target substance dissolved in a liquid raw material,
the apparatus comprising:
at least one raw material tank for storing the liquid raw material;
a solvent tank for storing a solvent for extracting the extraction target substance from the liquid raw material;
a pressurized gas feeding means for supplying pressurized gas to the solvent tank;
a small diameter portion, wherein
one end of the small diameter portion is connected to the solvent tank via a first solvent pipe,
the other end of the small diameter portion is connected to a second solvent pipe, and
an inner diameter of the small diameter portion is smaller than inner diameters of the first solvent pipe and the second solvent pipe;
at least one extraction unit including a mixer, an extraction portion and a liquid separating portion,
wherein the mixer comprises
a first inlet hole connected to the raw material tank, and
a second inlet hole connected to the small diameter portion by the second solvent pipe,
wherein the mixer is for mixing a liquid flowing in from the first inlet hole and a liquid flowing in from the second inlet hole,
wherein the extraction portion is the extraction portion for extracting the extraction target substance from the liquid raw material to the solvent, and the extraction portion is connected to the mixer,
wherein the liquid separating portion is connected to the extraction portion,
wherein the liquid separating portion has
a first outlet hole through which a first recovered liquid containing the solvent and the extraction target substance is discharged and
a second outlet hole through which a second recovered liquid separated from the first recovered liquid is discharged,
wherein at least one of the raw material tank is connected to the first inlet hole of the mixer of at least one of the extraction unit;
a first recovering tank connected to the first outlet hole for recovering the first recovered liquid; and
a second recovering tank connected to the second outlet hole for recovering the second recovered liquid.

2. The apparatus according to claim 1, wherein the extraction target substance is a contaminant, and the apparatus is a cleaning apparatus of the liquid raw material.

3. The apparatus according to claim 1, wherein the extraction target substance is an intended substance, and the apparatus is an extraction apparatus of the intended substance.

4. The apparatus according to any one of claims 1 to 3, wherein the pressurized gas feeding means comprises a high pressure gas feeding portion and a pressure regulating portion, and
a pressure inside the solvent tank and the first solvent pipe is 1.5 MPa or less.

5. The apparatus according to any one of claims 1 to 4, wherein the small diameter portion further comprises a temperature controller to regulate temperature of the small diameter portion.

6. The apparatus according to any one of claims 1 to 5, wherein
the apparatus comprises at least two of the extraction units connected in series,
the raw material tank is connected to the first inlet hole of the mixer of the extraction unit on most upstream,
in a pair of the extraction units connected in series, the second outlet hole of the extraction unit on upstream side is connected to the first inlet hole of the mixer of the extraction unit on downstream side;
the solvent tank is connected to at least two of the mixers of the extraction units via the small diameter portions,
the small diameter portions connected to the second inlet holes are the small diameter portions with different pressure losses on upstream side and downstream side,
channels connected to the first recovering tank and the second recovering tank have second small diameter portions.

7. The apparatus according to any one of claims 1 to 5, wherein
the apparatus comprises at least two of the extraction units connected in parallel,
the raw material tank is connected to the first inlet holes of the mixers of the at least two of extraction units; and
the solvent tank is connected to the second inlet holes of the mixers of at least two of the extraction units via the small diameter portions.

8. The apparatus according to any one of claims 1 to 5, wherein
the apparatus comprises at least two of the extraction units connected in series;
the raw material tank is connected to the first inlet hole of the mixer of the extraction unit on most upstream,
in at least one pair of the extraction units connected in series, the first outlet hole of the extraction unit on upstream side is connected to the first inlet hole of the mixer of the extraction unit on downstream side;
the solvent tank is connected to the mixers of the extraction units via the small diameter portions,
the small diameter portions connected to the second inlet holes are the small diameter portions having different pressure losses on upstream side and downstream side, and
channels connected to the first recovering tank and the second recovering tank have second small diameter portions.

9. The apparatus according to claim 8, wherein
in the extraction unit on most upstream and the extraction unit connected in series to the extraction unit on the most upstream, the first outlet hole of the extraction unit on the most upstream is connected to the first inlet hole of the mixer of the extraction unit on downstream side, and
in at least one pair of the extraction units connected in series, the second outlet hole of the extraction unit on upstream side is connected to the first inlet hole of the mixer of the extraction unit on downstream side.

10. The apparatus according to claim 8 or 9, wherein the apparatus comprises at least two of the solvent tanks, each of the solvent tank stores a different solvent.

11. The apparatus according to any one of claims 1 to 10, wherein the solvent tank is a pressure tank.

12. The apparatus according to any one of claims 1 to 11, wherein the mixer has a microchannel, and the width of the microchannel is 0.01 µm to 20 mm.

13. The apparatus according to any one of claims 1 to 12, wherein an inner diameter of the first solvent pipe and the second solvent pipe is 0.1 mm to 20 mm.

14. The apparatus according to any one of claims 1 to 13, wherein the apparatus further comprises a liquid raw material feeding means for feeding the liquid raw material to the mixer.
